# EUROPEAN PATENT APPLICATION

(11) **EP 1 225 508 A1**
(43) Date of publication of application: **24.07.2002**
(21) Application number: 01300459.3
(22) Date of filing: 19.01.2001
(51) Int. Cl.: G06F 9/44

(54) **A universal software application**

(71) Applicant: Thinkingcap Technology Limited, London, E1 6EX (GB)
(72) Inventor: The designation of the inventor has not yet been filed
(74) Representative: Finnie, Peter John

(57) **Abstract**

In the present invention, a computer program product comprises computer executable code for building software applications, the computer program including a model execution application implementing a meta-model (1) which is adapted to be populated with user inputs to generate one or more models (3,6-9). The model execution application also includes a predefined infrastructure model (5). The program is adapted to populate the meta-model (1) with data (19) input by a user to generate a model (13) and subsequently associate said model (3) with the predefined infrastructure model (5) by populating the infrastructure model with implementation data (15) associated with said model so as to define an executable specific software application. In the preferred embodiment, the infrastructure model (5) is defined in terms of the same meta-model (1). The meta-model (1) is preferably structured as a number of concepts, each concept having a number of properties, and one or more relationships between the properties of one or more of the concepts, in which the relationships are defined as a concept within the meta-model (1).

## Description

### Field of the Invention

The present invention relates to the development and execution of applications software, and in particular, to the use of business modelling techniques in the development and execution of applications software.

### Background to the Invention

Conventional software applications in use in business today have major shortcomings, these being high development costs, poor maintainability, integration and comprehension difficulties.

Most businesses experience problems in changing business applications, developing new applications, integrating legacy applications and incorporating new technologies, such as the Internet. There are three standard approaches to these problems: developing the applications in-house; buying-off-the-shelf software products; and using software components.

These approaches have significant draw-backs in common: high failure rates; cost and time over-runs; a poor fit to business requirements; and a lack of flexibility in the face of business change. The resulting products are complex and relatively rigid, requiring significant consultancy effort for implementation.

In current business applications there is generally an intermixing of business semantic and technology infrastructure code. Furthermore, the business semantic code is poorly structured. This makes existing business applications relatively amorphous bodies of very complex code. They are hard to comprehend and this poor comprehensive ability leads to poor understanding of the business application. This in turn leads to higher costs, higher risk of failure and other technology issues. In other words, something that cannot be understood cannot be managed.

Thus, for example, modelling of businesses using object orientated techniques typically involves defining the business as a number of related objects. Each object is capable of responding to events to provide an action response. Accordingly, the object ties together both the semantics and the implementation of the business, as described above. This can cause particular problems should for example the implementation of the business change, as this can require the reformulation of the entire business model, including both the semantic and technology infrastructure aspects, to take the modified behaviour into account.

Attempts to model businesses to overcome these problems have to date focussed on providing an underlying structure to the business data which models the business. This is typically achieved by storing the business data in a relational database, with the business model being defined implicitly within the database schema, the schema being expressed as the meta-data of the relational database.

Separately it is necessary to define an application which can interact with the database to implement the implied business models and the associated functionality. The business model is therefore also implicit within the code base of the application, as well as within the database.

As a result, alterations to the business model implicit in either the database or the application will not automatically be propagated to the application or the database, as required. Thus, for example, if the database schema is adjusted to modify the implied business model, then it will be necessary to make separate adjustments to the application code base.

Accordingly, these techniques suffer from the drawback that the business models implicit within the database schema and the application code base are static and cannot readily be adapted to alternative business situations. The resulting business model is therefore brittle in the sense that once the schema or application code base have initially been defined, they cannot practically be adjusted to allow alterations in the way in which the business operates to be implemented, without having to manually propagate the impact of the evolution to the application code base or the database schema.

As a result, business models determined in this way are typically unable to cope with alterations to the way which the business should function.

### Summary of the Invention

According to a first aspect of the present invention, a computer program product comprises computer executable instructions defining a model execution application, the model execution application implementing a meta-model which is adapted to be populated with user inputs to generate one or more models, the meta-model being structured as a number of concepts, each concept having a number of properties, and one or more relationships between the properties of one or more of the concepts, wherein the relationships are defined as a concept within the meta-model.

Preferably, the meta-model includes an active concept which can be populated with software components. In a preferred example, the meta-model comprises what is termed an "Exe" concept that defines processes that a model includes. In this context, an Exe concept defines any form of executable procedure.

Preferably, the model execution application comprises a computer program code portion that provides access to the meta-model and which is adapted to accept user inputs to allow a model to be generated. In this manner, a user can populate the meta-model with data (including, where necessary, specialist software components) to generate a new model.

The present invention therefore provides a computer program which uses a meta-model to define models, such as business models. The meta-model of the present invention defines the concepts and relationships of a model as a number of related instances within the meta-model. Since the meta-model is itself a model, it too is defined in terms of concepts and relationships which are instances within the meta-model, such that the meta-model describes itself. If a model needs to be adjusted, this can easily be achieved by modifying the instances of concepts and relationships within the meta-model, thereby ensuring that a self-consistent model is produced. These changes will then automatically be reflected in the defined model, thereby ensuring that models defined in accordance with the present invention can be easily adjusted.

Preferably, the model execution application comprises a program code portion that provides access to models generated using the meta-model so that the models can be executed by one or more users. Preferably, this includes populating the models with data.

Preferably, the model execution application comprises an infrastructure model defined in terms of the meta-model, that facilitates the execution of the meta-model and any models generated using the meta-model.

Preferably, the infrastructure model is adapted to accept user defined implementation inputs to populate the infrastructure model.

Accordingly, when installing the model execution application on a computer system, the infrastructure model preferably presents a user interface that allows the meta-model to be installed and executed by a user. Typically this would be carried out by a systems administrator. Thereafter, a systems analyst and/or a systems developer can run the application to generate new models which, for example, represent one or more business domain models. These can then be implemented by returning to the infrastructure model and populating the infrastructure model further with implementation data associated with the new business domain models. These business domain models can then be executed by users to implement the business, or at least a part thereof.

According to a second aspect of the present invention, a computer implemented method of generating a software application comprises the steps of:
populating a meta-model with data to define a model; and,
associating said model with a predefined infrastructure model by populating the infrastructure model with implementation data associated with said model so as to define an executable specific software application.

According to a third aspect of the present invention, a computer program product comprises computer executable code for building software applications, the computer program including a model execution application implementing a meta-model that is adapted to be populated with user inputs to generate one or more models, the model execution application also including a predefined infrastructure model, the program being adapted to:
populate the meta-model with data input by a user to generate a model; and,
associate said model with the predefined infrastructure model by populating the infrastructure model with implementation data associated with said model input by a user so as to define an executable specific software application.

According to a fourth aspect of the present invention, a computer implemented method of executing a business domain model, the business domain model modelling the semantics of the business domain and being defined in terms of a meta-model, the method comprising the step of associating the business domain model with an infrastructure model, the infrastructure model being defined in terms of the meta-model, to define an executable specific software application, in which the infrastructure model is populated with implementation data associated with the business domain model.

According to a fifth aspect of the present invention, a method of modelling a business domain comprises the steps of:
dividing the business domain into a number of core concepts, each core concept having a number of properties and representing a self contained function of the business domain;
determining the relationships between the core concepts; and,
populating a meta-model with data representing the core concepts and the relationships there between to thereby model the business domain.

According to a sixth aspect of the present invention, a computer program product comprises computer generated code mirroring a business domain, the computer program product including a business domain model which models the semantics of the business domain, and an infrastructure model which models the infrastructure of the business domain, wherein the business domain and infrastructure models are defined in terms of a meta-model, the meta-model comprising a number of concepts, each concept having a number of properties, and one or more relationships between the properties of one or more of the concepts, wherein the relationships are defined as a concept within the meta-model.

Preferably, the infrastructure model is defined in terms of the same meta-model. More preferably, the meta-model is structured as a number of concepts, each concept having a number of properties, and one or more relationships between the properties of one or more of the concepts, wherein the relationships are defined as a concept within the meta-model.

Preferably, the meta-model is used to define a business domain model that represents a business or a part thereof.

The business domain model defines the semantics of the particular business application being modelled, whereas the infrastructure model provides a physical context which allows the business domain to be implemented as required. Modelling the infrastructure separately therefore allows different business domains to be implemented using the same basic infrastructure. This in turn allows alterations to the business domains to be implemented without having to redefine the infrastructure used by the business domain. Furthermore, this allows modifications of the infrastructure to be implemented without affecting the business domain models, allowing infrastructure to keep pace with technological developments.

The data which is used to populate the business domain and infrastructure models can include any data relating to any aspect of the respective business domain. Thus, in the case of an airline company, the business data would typically include data relating to the aircraft used by the airline, as well as data regarding the number of users of the business model, the location of the airlines databases, and the like. Business data is not limited to simple data but can also include software components, for example Java code, that implement business processes. Accordingly, it can be seen that the meta-model treats these software components as just another form of data.

Different business data can be used by the business domain and infrastructure models. Thus, for example, data regarding the aircraft would typically be used by the business domain model, whereas user data and database locations will typically be used by the infrastructure models, although this is not necessarily the case.

In the present invention, each of the concepts includes a number of properties which are used to define each instance (or each specific example) of the concept. Accordingly, each instance of the concept will have respective property values.

At least one of the properties of each concept represents a primary key, the primary key being unique for each instance of the concept. Thus, one (or a combination of several) of the concept properties is arranged to be different for each instance of the concept. This is done in order to ensure that each instance of a concept can be uniquely identified.

For example, if the concept relates to aircraft of an airline fleet, then each instance of the aircraft concept would correspond to a respective aircraft within the fleet. In this case, the properties of the aircraft concept would relate to properties of the individual aircraft, such as the aircraft type, or the like. As there will typically be several aircraft within the fleet of the same type, a primary key is defined, such as a aircraft identifier, which is different for each aircraft in the fleet, thereby allowing each aircraft to be uniquely identified.

The relationships occur when a second concept is related to a first concept. In this case, one of the properties of the second concept represents a foreign key, the foreign key corresponding to the primary key of the first concept and representing the relationship between the two concepts. This allows information concerning the relationships to be defined within the properties of the concepts.

In the above mentioned example, a seat concept may be defined to allow the airline to run booking system for seats on the aircraft. In this case, each instance of the seat concept would define a seat within a given aircraft. It will be appreciated from this, that as each seat is uniquely defined, there will be a number of seats within the seat concept that relate to a particular aircraft. Accordingly, the primary key from the aircraft concept should be propagated to the seat concept as a foreign key, allowing the seats of a given aircraft to be easily identified.

It should be highlighted that in certain circumstances, the properties of some instances of a concept can be related to the properties of other instances within the same concept.

In the present invention, the meta-model is adapted to be populated by data. In order to achieve this, each concept preferably defines a respective data table, each property defining a respective column within the table.

Accordingly, the meta-model of the invention allows data to be entered in specifically designed tables so that each instance of the concept is correctly defined. Thus in the above example, by carefully defining the properties of the aircraft concept, this can ensure that all the information required about the aircraft can be stored in the meta-model, allowing it be used as required.

From this, it will be appreciated that the properties of the concepts preferably remain invariant regardless of the circumstances in which the model is used. This allows the concepts to be reused in other business domain models.

For example, the aircraft concept may include such properties as aircraft number and aircraft type which will be required whether the aircraft concept forms part of a seat booking system or an maintenance system. In this case, the aircraft concept can therefore be used in both the seat booking and maintenance systems, although typically different relationships will be formed with the concept depending on the respective business domain being modelled.

In the seat booking example, the aircraft concept would typically be related to a seat concept, whereas in the maintenance system example, the aircraft concept would typically be related to an operational status concept. Accordingly, if a model is to be adapted to apply to a different circumstance, for example if the aircraft concept is to be adapted to be relevant to a maintenance team as opposed to a booking system, then this can be achieved by simply altering the child concept of the aircraft concept.

Alternatively, it is possible to define the properties of a concept such that the properties are unique to a given business domain. However, this makes the concept unique to the respective domain and prevents reuse of the concepts in different domains.

For example, if the aircraft concept is used in booking airline seats, then the aircraft concept could include properties such as the type of aircraft and the number of seats provided thereon. In contrast, if the aircraft concept is to be used by the maintenance team, then the concept would typically include properties regarding the operational status of the aircraft, including details of how many miles have been flown and when the last service was performed.

The data tables are populated by entering instance data representing an instance of the respective concept, the instance data being entered within a respective row of the data table. Accordingly, this allows the model to handle each instance of a concept separately. In the example, details of each aircraft would therefore be specified in a respective row of the aircraft concept table. The data could however be stored in alternative ways.

The meta-model preferably includes a "Concept" concept defining the concepts of the model to be defined, the properties of the "Concept" concept defining the properties of the concepts of the model to be defined.

Accordingly, in the above example, the meta-model will include a concept that sets out details of each of the concepts used in the model being defined. Thus, in the example, instances of the "Concept" concept would include the aircraft concept and the seat concept.

This allows certain features of the concepts to be specified, such as the name and a brief description of the concept purpose. This in turn allows users of the model to understand the model structure.

The meta-model also includes a "ConceptProperty" concept which is related to the "Concept" concept. In this case, each instance of the "ConceptProperty" concept expresses a property of a respective concept defined in the "Concept" concept. This can be achieved directly by defining each property separately within the "ConceptProperty" concept.

Each instance of the "ConceptProperty" concept would specify a property of one of the concepts to be modelled, such as a property of the aircraft concept. Accordingly, if it is necessary to modify one of the properties of a concept, such as to change the value of the property from an integer to a character string, then it is necessary to make appropriate changes to the respective instance of the "ConceptProperty" concept.

Alternatively a further concept, referred to as a "CapProperty" concept can be used to define each property, with the "ConceptProperty" concept providing a mapping between instances of the "Concept" concept and the associated properties in the "CapProperty" concept, thereby allowing common definitions to be factored out.

The meta-model includes a "ConceptKey" concept related to the "Concept" concept, each instance of the "ConceptKey" concept identifying the primary key of a respective concept defined in the "Concept" concept. This again allows the primary keys of the concepts to be determined.

In addition to this, the meta-model includes a "ConceptRel" concept related to the "ConceptKey" concept, each instance of the "ConceptRel" concept identifying the relationships between the concepts defined in the "Concept" concept.

With the concepts and relationships there between defined within the meta-model, this ensures that the model to be defined is self-consistent. It also has the effect that the meta-model can be defined in terms of its own structure, which in turn allows the models to be adapted and varied relatively easily.

From the above, it will be realised that the computer program product can be populated with data so as to define a business model. In this case, the business model is usually associated with an infrastructure model which models the business infrastructure; and, a business domain model which models the semantics of the business.

Accordingly, the business domain model defines the semantics of the particular business application being modelled, whereas the infrastructure model provides a physical context which allows the business domain to be implemented as required. Modelling the business domains and the business infrastructure separately therefore allows different business domains to be implemented using the same basic infrastructure. This allows alterations to the business domains to be implemented without having to redefine the infrastructure used by the business domain. This also allows modifications of the infrastructure to be implemented without affecting the business domain models, allowing infrastructure to keep pace with technological developments.

For example, if new software is developed which allows improvements in the infrastructure to be achieved, this can usually be implemented without affecting the actual implementation of the business domain.

In this case, the infrastructure model is preferably formed from a set of individual models including, for example, a configuration model, an operations model, a process model and an install model, each of which are defined in accordance with the meta-model. However, any suitable infrastructure model could be used.

In a preferred example, the configuration model defines how the computer program product should be adapted to take account of low level unstructured configuration data addressed at each of user, user-group, environment type and business processes.

The operations model is adapted to model operational and statistical data on both a historical and live snapshot basis.

The process model models the current execution state of the business domain model, each aspect of execution being represented by a respective concept within the process model.

The install model defines the installation of the computer program product onto one or more operating systems and machines. Thus, the install model will define the supporting software and hardware systems, such as the operating and database systems. This will include information regarding the location of data on the system, how resources should be used by the computer program product, how information should be presented to a particular user on a screen, security access available for each user, and the like.

The infrastructure model set is preferably predefined in that the individual models in the set are defined in terms of the meta-model. This is because the business domain model is defined in terms of concepts and relationships, the meaning of which is only applied in the context of a specific domain model. Accordingly, as the majority of the infrastructure depends on the concepts and their relationships, as opposed to the meanings of the concepts, this allows the infrastructure to remain substantially invariant for different business domain models, which in turn allows the majority of the infrastructure to be predefined. Accordingly, reuse of the infrastructure can vastly reduce the amount of work required to model the business, as well as providing confidence that the model will function correctly once defined.

In this case, the infrastructure model is populated in accordance with user input business data. This provides any necessary context to the infrastructure model and is usually only required at a basic level, for example to ensure that information is presented to the user in a desired manner. In this context, the term "business data" includes Java code or other software applications.

In the example of the airline, the booking system business domain may be implemented to provide an interactive representation of the aircraft which shows the actual location of the seats, and allows these to be selected on the screen for booking purposes. In contrast to this, the maintenance business domain would typically only require information concerning the repair status of seats on the aircraft. This can use a very similar data infrastructure without requiring a front end to produce the interactive representation. Accordingly, both business domains would use a similar infrastructure which only includes minor differences in the way the information is presented to the user.

The computer program product can include a number of predetermined code portions which when operated in accordance with the infrastructure model allow the infrastructure to be implemented. These code portions define predetermined infrastructure implementations which can apply to many different business domains.

It will also be realized that the code portions may be provided as part of a reference library allowing those portions of code which vary between domains to be selected in accordance with the context of the particular model.

The business domain model is typically implemented by populating the business domain model with business data representative of the business domain.

For example, in the case of an airline, the booking system business domain would require the input of data regarding the number of aircraft together with details of the seating on each aircraft in order to allow the seat booking system to function within the context of the airline.

Once the business domain and infrastructure models have been defined however, the computer program product can combine the computer code portions with the input business data to generate applications software which implements the model. Accordingly, this vastly reduces the amount of work required to design or redesign a business model and then implement it. This in turn allows business models to be updated more frequently to reflect changes in the business environment, helping the business remain competitive.

The key features of the present invention are that it allows an application business model to be defined and modified quickly, easily and separately from the infrastructure codes; its speeds bespoke or package application development by providing a developer with general purpose infrastructure code for the bulk of any business application; the application business model allows application code to be quickly customized and subsequently modified as the business evolves; and it enables applications for the World Wide Web. Being model based, it is significantly more sophisticated, flexible, and useful than any other available product. It is able to provide businesses with dramatic time and cost savings compared with existing methods for developing or modifying business applications and, unlike other software products, it requires no radical re-engineering to respond to changing business needs.

The present invention provides the ability to model the data and processes of a business in a unified and explicit framework. Within this modelling system, models can be customized and new business concepts and processes added with remarkable speed. The development and execution platform uses the definitions of the model and provides most common application concepts and functions. Linking a specific business model with the pre-written infrastructure code enables the present invention to generate most of the code required to execute an application. Development productivity benefits from the modelling approach because the only concepts and functions that need to be added are those that are unique to the business. Standard software interfaces to common databases, data feeds, GUI components, etc, are provided. Simple frameworks are also provided to customize platform integration, integrate new technologies, support custom GUIs etc.

The meta-model of the present invention makes the business semantics explicit and tangible. The model imposes a structure on the business semantics, thus preserving their "shape" and prevent the creation of an amorphous mass of code later in the development life cycle. The model also enables a clear separation of business semantics from the technology infrastructure. It also makes it possible to understand business applications, rationalise them, discuss their behaviour in a meaningful way and manage their development.

### Brief Description of the Drawings

Examples of the present invention will now be described in detail with reference to the accompanying drawings, in which:
Fig. 1 is an overview of the hierarchy utilized by the present invention;
Fig. 2A is a schematic diagram representing the structure of a concept in the meta-model of the present invention;
Fig. 2B is a schematic diagram representing the keys and relationships used in the meta-model of the present invention;
Fig. 3 is a schematic diagram representing the structure of a domain according to the present invention;
Fig. 4 is a schematic diagram of the Exe concept utilized by the present invention;
Fig. 5 is a schematic diagram of the verb and body concept utilized by the present invention;
Fig. 6 is a schematic diagram of a non-relational concept utilized by the present invention;
Fig. 7 is a schematic diagram showing the model dependencies of the infrastructure models used by the present invention;
Fig. 8 is a schematic diagram of apparatus for implementing the present invention;
Fig. 9 illustrates the structure of the computer program product of the present invention;
Fig. 10 is an example of the GUI of the present invention; and,
Figs. 11 to 20 show an example of the GUI of Fig. 9 when applied to the example of an airline check-in procedure.

### Detailed Description

The model execution application of the present invention may conveniently be supplied in the form of a CD-ROM that first requires installation on a computer or over a computer network before it can be run. The installation process and subsequent use of the model execution application to build executable models using the meta-model of the present invention will be described later. Firstly, we shall describe the structure of the model execution application, and the meta-model in particular.

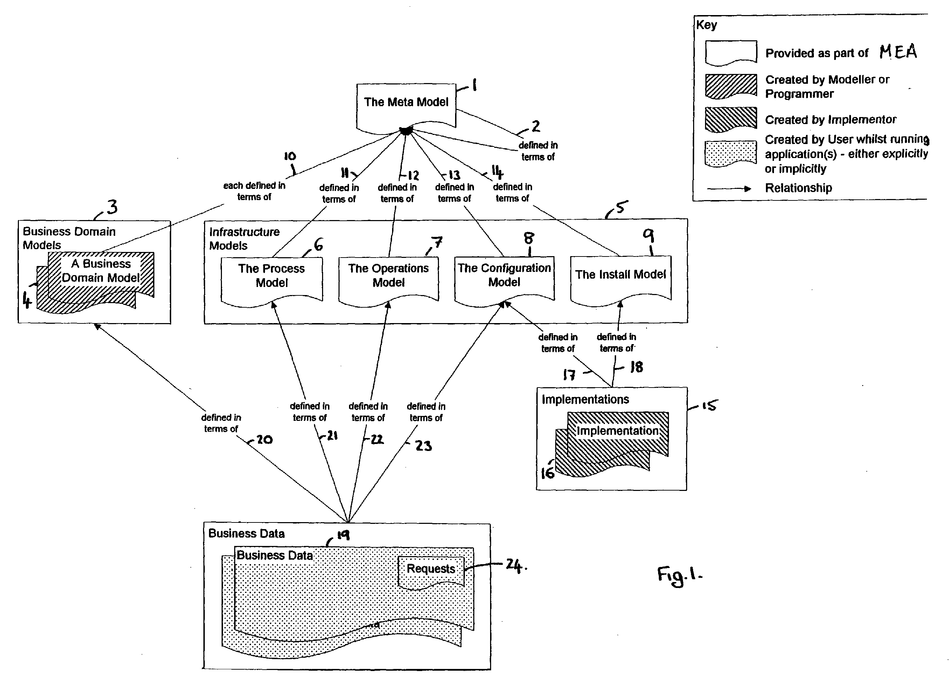

As shown in Figure 1, the present invention uses a hierarchal structure in order to model and implement business processes. At the highest level, the model is defined in terms of a meta-model 1, the structure of which will be described in more detail below.

The meta-model 1 defines concepts and relationships which can in turn be used to define models. Because the meta-model allows any concepts and relationships to be defined, this allows the meta-model to be defined in terms of the concepts and relationships defined therein. Accordingly, the meta-model corresponds to a model of models which can be defined in terms of itself, as shown by the relationship 2.

The next level of detail in the hierarchal structure shown in Figure 1 is formed from business domain models indicated generally at 3, with one example being shown specifically at 4. As indicated by the relationship 10, each business domain model 4 is defined in terms of the meta-model 1.

Business domains are separate portions of a business which are capable of being identified independently, albeit sometimes with interactions with other business domains within the business. Each business domain can be defined in terms of certain core concepts and a number of relationships between these concepts, with each concept being a defined coherent entity that has certain properties and relationships with other concepts.

Thus, for example, if the business is an airline company the business domains would typically include such portions of the business as seat booking system, aircraft maintenance systems, and the like.

Typically, in order to define an entire business it is necessary to define a number of business domains each of which is modelled by a separate model.

From the above it will be realized that specific business domain models 4 are defined using the meta-model 1 by mapping the concepts of the business domain model (and their associated interactions) as concepts (and associated relationships) within the meta-model. This is usually performed by a skilled person, such as a business analyst, or the like, who is able to identify the concepts and relationships within the business domain and then populate the meta-model.

Thus, for example, the manner in which data is presented to a user will typically vary depending on the circumstances or business domain in which the present invention is used.

In the example of an airline seat booking system, it is preferable for the user to be presented with the information regarding availability of seats in the form of an aircraft outline representation, with each seat and its availability indicated in the corresponding location on the outline. In contrast, a maintenance system will typically only need information regarding a seat number and its repair history, and would not therefore require the aircraft outline representation.

The meta-model defines a structure into which data and data representing models can be entered. The meta-model achieves this by allowing the concepts and relationships of the model to be defined in terms of a number of respective concept data tables, with the relationships being represented by appropriate links between the tables.

At the same level as the business domain models, the structure also includes a number of infrastructure models 5, including a process model 6, an operations model 7, a configuration model 8, and an install model 9. These infrastructure models cooperate with each other to define the infrastructure of the business and in particular, how the infrastructure of the business should operate in order to implement the associated business domain model 4. The function of each of the infrastructure models 5 will be described in more detail below.

Each of the infrastructure models 6, 7, 8, 9 are also defined in terms of the meta-model as shown by the relationships 11, 12, 13, 14.

The use of the meta-model in this way means that the infrastructure models 5 are defined separately from the business domain models 3. This allows the same infrastructure to be used to implement any one of a number of different business domains. This helps provide generality in the model such that a new infrastructure does not need to be defined every time a new business domain is implemented. This in turn allows alterations to the business domains to be implemented relatively easily without having to redefine the infrastructure used by the business domain. This also allows modifications of the infrastructure to be implemented without affecting the business domain models, allowing the infrastructure to keep pace with technological developments.

Thus, for example, if new software is developed which allows improvements in the infrastructure to be achieved, this can simply be implemented without affecting the business domain model.

It will be realized from this that business domain software is software that is unique to a business. Accordingly, the business domain defines the semantics of the business application.

In contrast to this, the infrastructure is the software that provides a physical context for the business domain software, allowing the business domain to be implemented as required.

For example, the infrastructure can be used to save and load data from a database, transmit data across a network, or display the data on a computer screen. The infrastructure can therefore be varied relatively easily depending upon the particular business domain to which it is applied.

In order to aid this process, implementations 15 are defined at the next level of the hierarchy which are used to populate the configuration model 8 and the install model 9. Each individual implementation 16 is typically designed by a systems administrator or other specialist implementor to allow the application to be installed at a particular site.

Accordingly, once the business domain model has been designed, it is necessary to provide business data 19 which is specific to the particular business process being implemented.

Thus, in the case of an airline seat booking system, it would be necessary to provide business data concerning the number and type of aircraft in the fleet, together with details of the passenger seating available on each aircraft.

This form of business data 19 is entered after the model has been defined and is used to populate the business domain model 4, the process model 6, the operations model 7 and the configuration model 8, as shown by the relationships 20, 21, 22 and 23.

In addition to this form of business data, The business data 19 also generally includes request data 24. The request data is provided by a system user to request a business action. The business actions are the initiation of the execution of a business process, such as responding to a request for information, providing a service, or the like.

The request data 24 may, as well as defining the type of request, also include additional business data required to complete the request.

Thus, in the case of an airline seat booking system, it would be necessary for a request to book a seat to include data indicating the seat which is to be booked, and this must be entered by the user during the seat booking procedure.

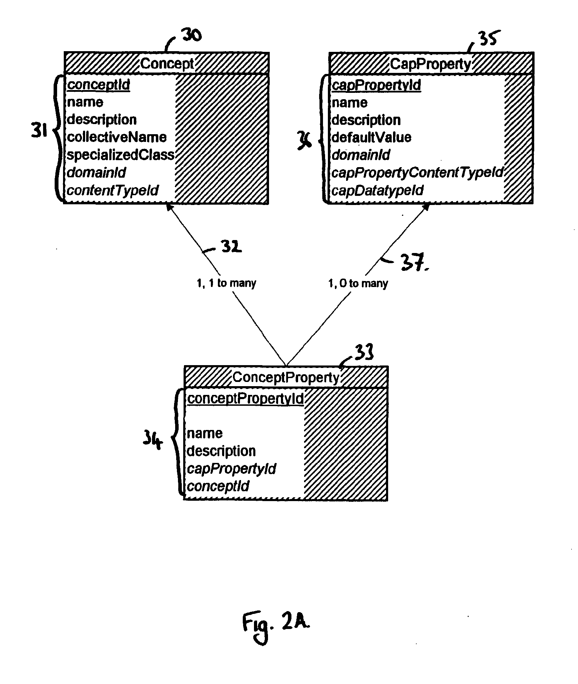

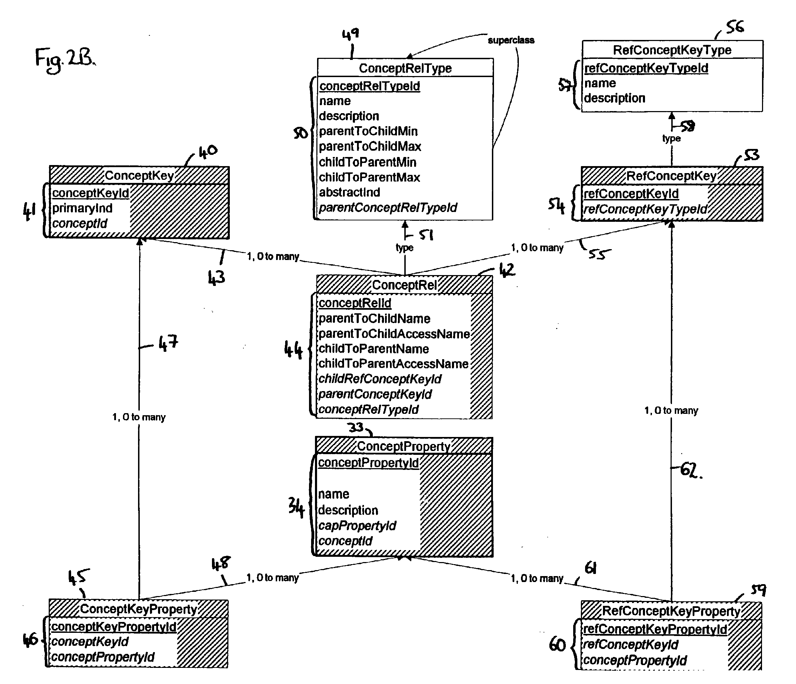

The meta-model 1 utilised by the present invention will now be described in more detail with reference to Figure 2A, which shows the basic concepts within the meta-model, and Figure 2B which shows the keys and relationships between the concepts.

As shown in Figure 2A the meta-model includes a "Concept" concept 30 including a number of properties 31. The "Concept" concept is used to define the concepts used by the model currently being defined.

Accordingly, each concept being used by the model would have to be entered as an instance within the "Concept" concept 30, with each of the properties 31 being defined.

Thus, in this example, each concept (each instance of the "Concept" concept) should be assigned a conceptId, a name, a description, a collective name, a specialised class, a domainId and contentTypeId. However, these properties will depend on the nature of the concepts being defined and will therefore typically vary in different implementations.

The conceptId is an identifier used to uniquely identify each concept defined within the "Concept" concept 30 for a given business model.

Thus, for example, in the case of an airline check-in system, it will typically be necessary to have concepts relating to the seats available on the aircraft, the aircraft available in the airline fleet, the baggage allocation for an aircraft, and the check-in procedure. Accordingly, each of these concepts would be assigned a separate conceptId. The conceptId is therefore typically a number which is unique for each concept.

Every concept will have a respective property which is unique to each instance of a concept defined therein, and this property is known as a primary key (or "ConceptKey" as it is sometimes referred to). Accordingly, in the case of the "Concept" concept, the primary key is the conceptId, as shown in Figure 2A by the underlining of the conceptId property.

Related to the "Concept" concept 30 by relationship 32 is a "ConceptProperty" concept 33, which is used to define the properties of instances of the "Concept" concept. This is achieved by having each instance of the "ConceptProperty" concept define a property of a respective instance of the "Concept" concept 30. Accordingly, a set of instances of the "ConceptProperty" concept will define the structure of a respective instance of the "Concept" concept 30.

This therefore allows modifications to be made to the properties of a concept, such as to change the value of the property from an integer to a character string, by making appropriate changes to the respective instance of the "ConceptProperty" concept.

In this example, the "ConceptProperty" concept 33 includes a number of properties 34 including a ConceptPropertyId, a name, a description, a CapPropertyId and a ConceptId. In this case, as shown by the underlining, the ConceptPropertyId is the primary key of the "ConceptProperty" concept 33.

The relationship 32 is known as a parent-child relationship in that each instance of a "ConceptProperty" concept provides details of a respective one of the properties of an instance of the "Concept" concept.

In the airline check-in system example, an aircraft concept would typically be provided, with each instance of the aircraft concept providing details of a respective one of the aircraft in the airline fleet.

A seat concept is also provided, with each instance of the seat concept providing details of a respective one of the seats in a given one of the aircraft. In this case, the seat concept provides details of the seats of the aircraft, and accordingly, the seat concept is related to the aircraft concept such that the seat concept is a child concept of the parent aircraft concept.

In the Figures, the parent-child relationship is represented by an arrow, such as the arrow 32, with the arrow pointing from the child concept, in this case the "ConceptProperty" concept 33, to the parent concept, in this case the "Concept" concept 30.

In addition to this, the nature of the relationship is specified by the text associated with the respective arrow. In this case, the relationship is a "1, 1 to many" relationship indicating that for this relationship, the child concept will always have one parent concept, whereas the parent concept may have between one and many child concepts. Thus the text specifies "the number of possible parent concepts the child concept can have, the number of possible child concepts the parent concept can have", for the specific relationship.

In addition to this, there are other special cases. For example, one of these is where the nature of the relationship is "Type" meaning that the parent concept expresses the type of child concept. For example, an aircraft concept may be related by a "Type" relationship to an aircraft type concept. Each instance of a "Type" concept therefore corresponds to a domain level type.

Another case is when the child is a specialisation of the parent concept, in which case the relationship is a "Superclass". For example a vehicle concept would be a "Superclass" of the aircraft concept. Both the "Superclass" and "Type" relationships are "1,0 to many" relationships.

In order to allow a correlation between instances of parent and child concepts to be defined, the primary key of the parent concept is propagated to the child concept as a foreign key. This allows each instance of the child concept to include a cross reference to the relevant instance of the parent concept to which it refers.

In the above example, an aircraftId would be used to uniquely identify each aircraft in the aircraft concept. In this case, aircraftId would be propagated to the seat concept as a foreign key, allowing the aircraft to which each seat in the seat concept belongs to be determined.

Each seat defined within the seat concept would have a respective seatId, representative of the individual seat, together with the indication of the aircraftId of the aircraft to which the seat belongs.

In Fig. 2A, the foreign keys are indicated by italics. Thus, as shown, the conceptId from the "Concept" concept is propagated to the "ConceptProperty" concept as a foreign key, thereby allowing the relationship between the two concepts 30,33 to be defined.

The "ConceptProperty" concept 33 is also related to a "CapProperty" concept 35, having a number of properties 36, as shown by the relationship 37.

The "CapProperty" concept 35 is an archetype of the "ConceptProperty" concept and is therefore used to factor out common concept properties from the "ConceptProperty" concept 33 and to define the semantics of the properties.

Thus, for example, every concept defined in the "Concept" concept 30 will have a name property which is used to allow the users to identify the relevant concept. Accordingly, rather than define the name property separately for each concept, the name property would be defined a single time in the "CapProperty" concept 35. The "ConceptProperty" concept 33 would then refer to the "CapProperty" concept 35 each time the name property is to be defined for a respective instance of the "Concept" concept, rather than defining the name property individually each time.

In practice, the "CapProperty" concept 35 is used to define each property of each instance of the "Concept" concept, with the "ConceptProperty" concept providing a cross reference between instances of the "Concept" concept and instances of the "CapProperty" concept 35.

In this example, the properties 36 of the "CapProperty" concept 35 include a CapPropertyId, a name, a description, a defaultValue, a domainId, a CapDataTypeId and a CapPropertyContentId. As shown, the CapDataTypeId and the CapPropertyContentId are foreign keys of additional concepts (not shown in this example).

The keys and the relationships between the concepts are also defined in the meta-model, as shown in Figure 2B.

In this case, the primary key of each concept is defined in a "ConceptKey" concept 40, which has a number of properties 41. These include a ConceptKeyId, which uniquely identifies each primary key (and is therefore a primary key itself), a primaryInd and a conceptId. The conceptId is a foreign key indicating that the "ConceptKey" concept is related to the "Concept" concept, although this relationship is not shown on the Figures 2A and 2B.

Relationships between the concepts, such as the relationships 32, 37 are defined in the "ConceptRel" concept 42, which is in turn related to the "ConceptKey" concept by the relationship 43 as shown. The properties of the "ConceptRel" concept 42 are shown at 44.

The properties of the "ConceptKey" concept are defined in the "ConceptKeyProperty" concept 45, which includes the properties 46, and which is related to the "ConceptKey" concept by a relationship 47. The "ConceptKeyProperty" concept 45 is also related to the "ConceptProperty" concept 33, as shown by the relationship 48, as it defines the properties of the primary keys, which are properties of the concepts, and which are therefore also defined in the "ConceptProperty" concept 33.

A "ConceptRelType" concept 49 is provided to define the types of relationships which are available between the concepts. This will generally include parent-to-child relationships and child-to-parent relationships, although others can also be defined within the properties 50 of the "ConceptRelType" concept 49. It will be appreciated that the "ConceptRel" concept is related to the "ConceptRelType" concept 49 by the relationship 51.

A "RefConceptKey" concept 53 having properties 54 is provided to define reference keys which are used across a number of properties, such as foreign keys. The "ConceptRelType" concept 49 is related to the "RefConceptKey" concept 53 by the relationship 55.

The "RefConceptKey" concept 53 is in turn related to a "RefConceptKeyType" concept 56, having properties 57, via the relationship 58. This defines the types of reference keys which are used within the model, such as a foreign key.

Finally, a "RefConceptKeyProperty" concept 59 is provided to indicate whether a particular concept key is a member of a particular "RefConceptKey" instance. The "RefConceptKeyProperty" concept 59 includes properties 60 and is related to the "ConceptProperty" concept 33 and the "RefConceptKey" concept 53 by the relationships 61 and 62 respectively.

When populated, the meta-model described above with respect to Figs. 2A and 2B defines models of business in accordance with the present invention.

In order to achieve this, as outlined above, the model includes a business domain model, to model the semantics of the business for a particular business domain, as well as infrastructure models, which are used to allow the business model to be implemented.

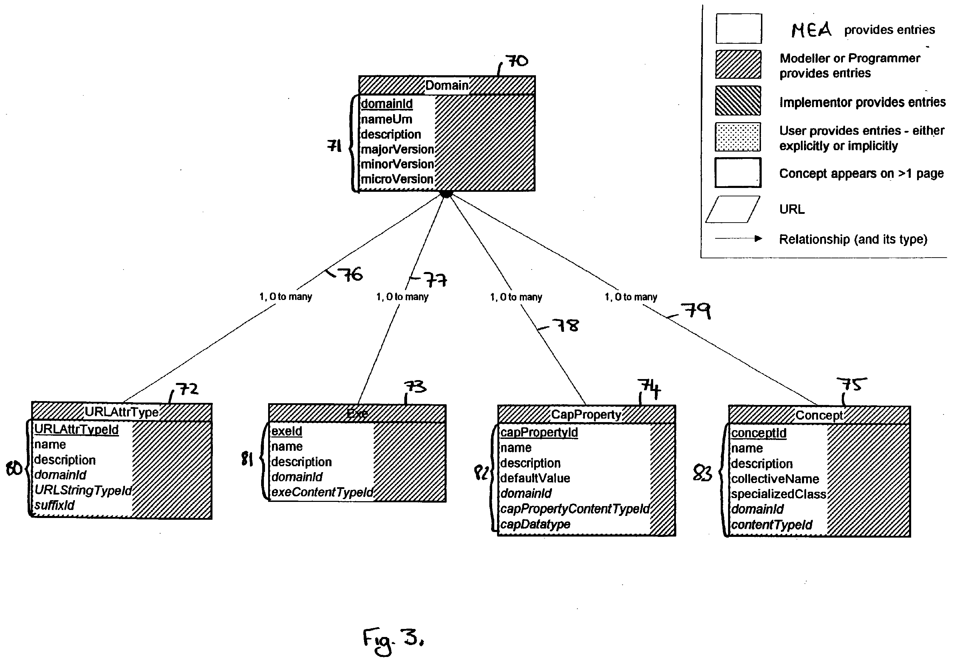

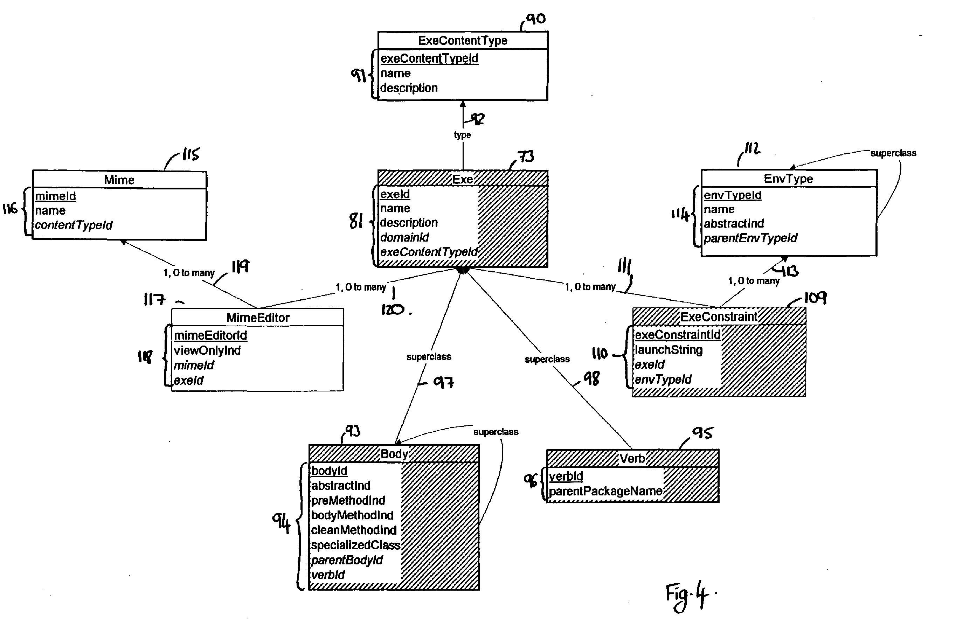

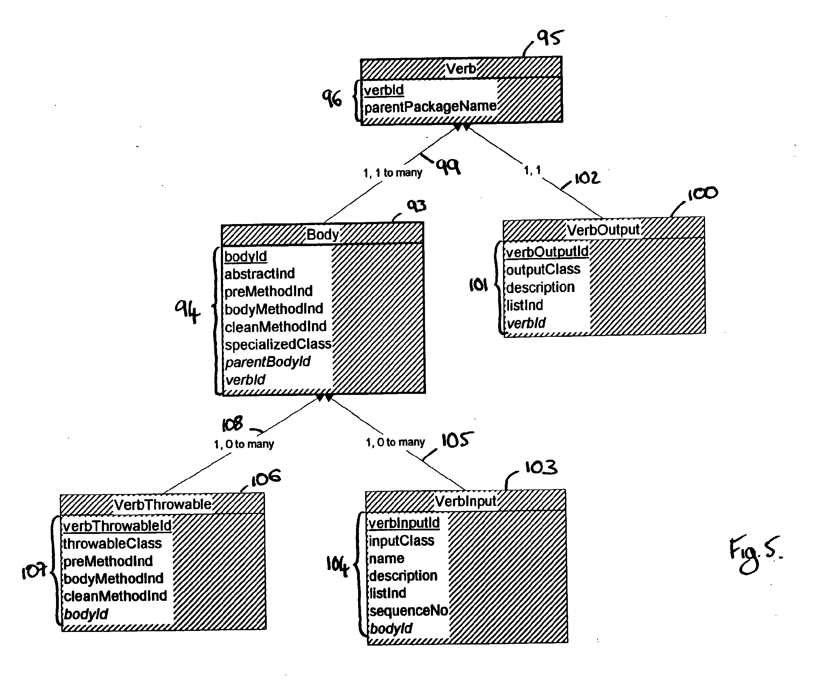

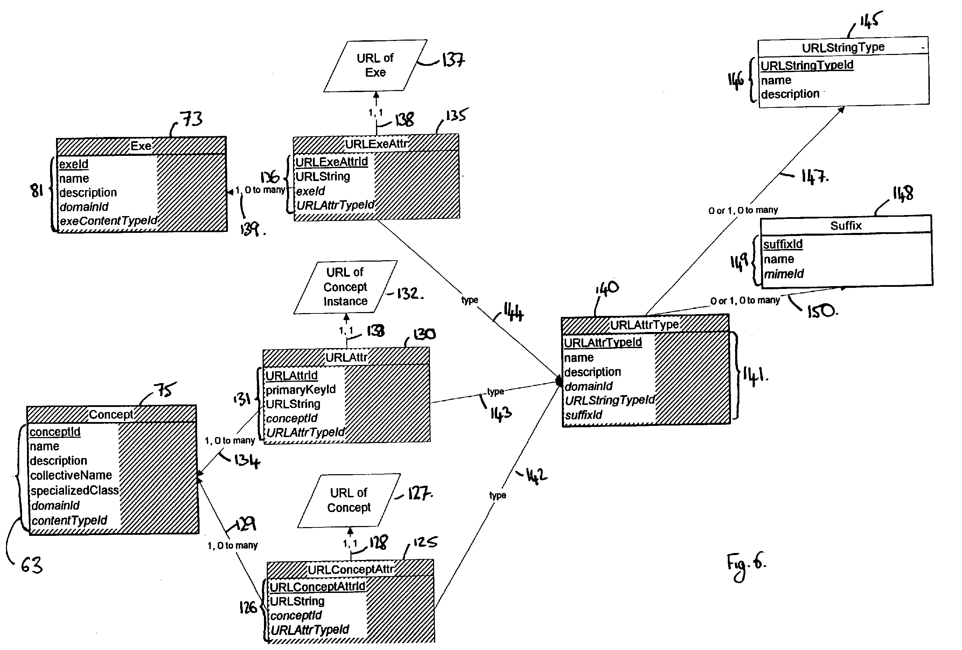

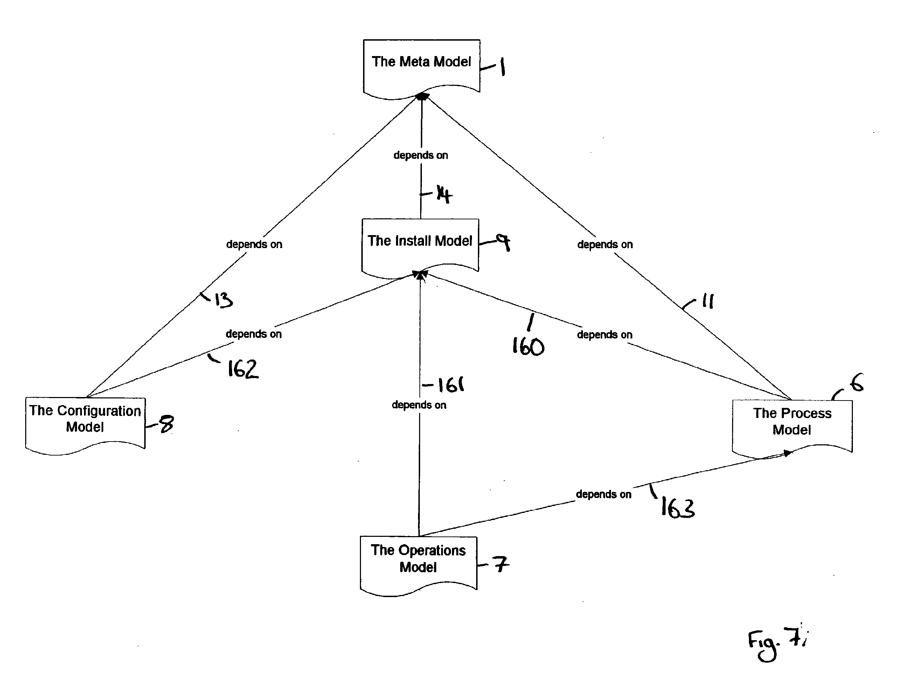

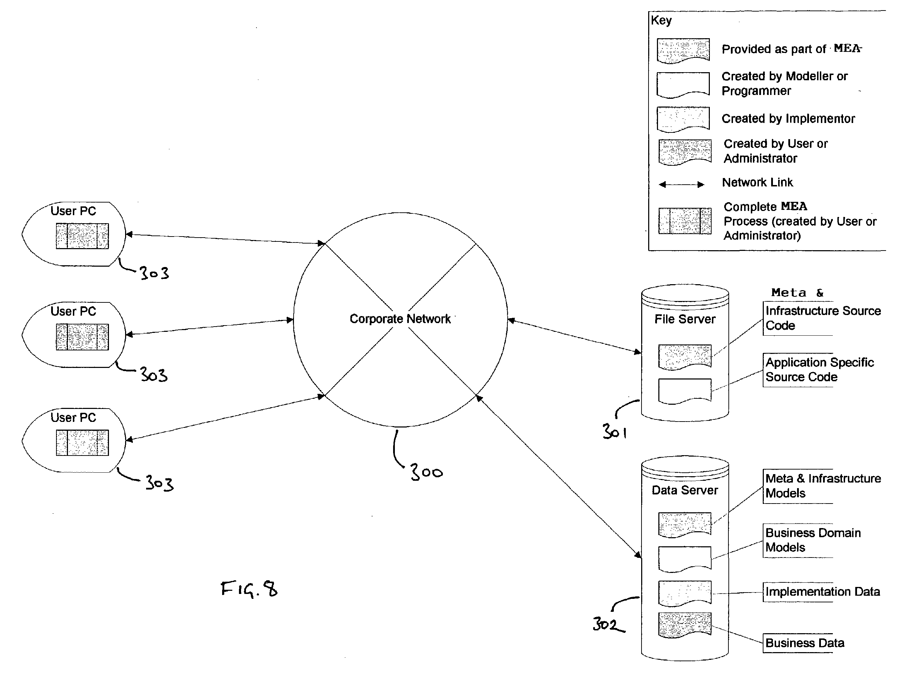

The basic business domain model structure which is used to generate specific business domain models 4 is shown in Figure 3.

In this example, the structure includes a "Domain" concept 70 having a number of respective domain properties 71, including a domainId (which forms the primary key of the "Domain" concept), a nameUrn, a description, a majorVersion, a minorVersion and a microVersion.

Each instance of the "Domain" concept corresponds to a different business which is to be modeled by the present invention.

In this example, the domain model also includes "URLAttrType", "Exe", "CapProperty" and "Concept" concepts 72,73,74,75, which are related to the "Domain" concept 70 by the relationships 76,77,78,79, as shown.

These concepts 72,73,74,75, are used to define various features of the domains which are instances of the "Domain" concept.

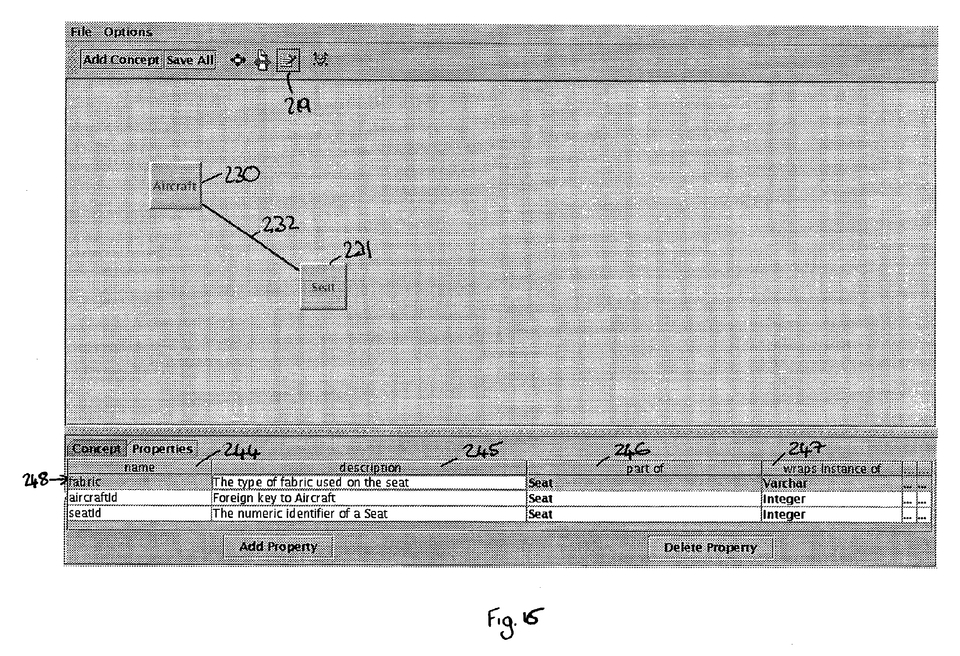

In particular, the "URLAttrType" concept classifies a relationship between concepts of a given domain and non-relational data, with details of the relationship being specified in child concepts which will be described in more detail below with respect to Figure 6.

Thus, non-relational data such as documents like Word™ documents, which can be accessed via a URL can be tied into specific concepts and instances of concepts, and Exes using the "URLAttrType" concept.

The "Exe" concept 73 defines a business process which a domain will use. The "Exe" concept will be described in more detail below but is used to define any form of executable procedure including "Verbs" & "Bodies" (which will also be described in detail below), software applications that are required to implement the specific domain model.

For example, in the case of the airline maintenance system business domain, the "Exe" instance may include Word which would be required in order to view Word documents setting out the maintenance procedures for the aircraft in the fleet.

In the case of the airline check-in system example, typical instances of the concept "Exe" would include software for printing tickets, procedures and/or software to validate the seating to be selected, and the like.

The "CapProperty" concept 74 again, as in the meta-model, defines archetypes of "Domain" concept properties 71 to reduce redundancy in the definition of the concept properties for instances of the "Domain" concept.

Finally, the "Concept" concept 75 is used to define the concepts used in each of the business domain models.

It will be realised that the concepts 72,73,74,75 represent the minimum concepts required to define a business domain model, and in general additional concepts would also be used.

Again, as in the meta-model, each of the concepts 72,73,74,75 includes respective properties 80,81,82,83, as shown.

In addition to this, the domainId of each respective domain is propagated to the concepts 72,73,74,75 as a foreign key, as shown.

As mentioned above, when a business is to be modeled, the business is first considered as a number of domains into which the business can be divided. Each domain will then be defined as an instance of the "Domain" concept and be assigned a respective domainId. Additional properties of the domain will then be defined.

In order to achieve this, data is entered into a "Domain" concept table within a database. The "Domain" concept table would include a number of columns, with each column corresponding to a respective property within the "Domain" concept. Each row in the table then corresponds to a respective instance of the "Domain" concept (i.e. a respective domain within the business).

An example of a partial "Domain" concept table, showing only the first three properties 71, for the case of an airline, is shown in Table 1 below.

**Table 1**

| domainId | nameUrn | description |
|---|---|---|
| 1 | domain:com.airlinecompany.domain.booking | airline seat booking domain |
| 2 | domain:com.airlinecompany.domain.maintenance | aircraft maintenance domain |
| 3 | ... | ... |

The analyst then considers each business domain in turn, and for each one determines the core concepts of the respective business domain. Details of the core concepts are then entered into a respective "Concept" concept table.

Again, each column of the "Concept" concept table is used to define a particular property of the concept, with each instance of the concept being entered in a separate row. Thus, initially the analyst will define each concept as an instance within the "Concept" concept 75.

Once this has been completed, relationships between properties of the different concepts are defined. Again, these relationships are expressed in a respective data table. By following this procedure through, the concepts and relationships defined therein are entered within the tables.

In this case, the relationships and keys are also defined within the appropriate "ConceptRel", "ConceptKey" and "RefConceptKey" concepts 42, 40, 53 within the meta-model.

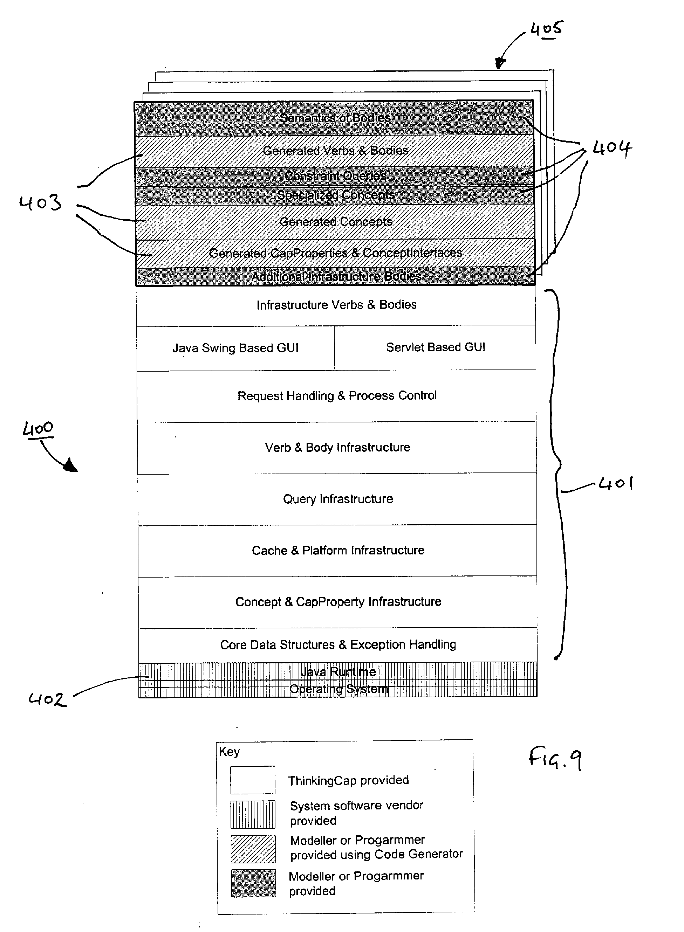

The implementation of the "Exe" concept 73 will now be explained in more detail with respect to Figure 4. As shown, the "Exe" concept 73 is related to an "ExeContentType" concept 90 which has a number of properties 91, via the relationship 92.

The "ExeContentType" concept 90 specifies the different types of "Exe" concept that are defined in the model. Thus, for example, as mentioned above, this can include applications, such as Word, Excel, or the like, as well as "Verbs" and "Bodies" (which will be explained in more detail below) and other executables.

The type of each instance of the "Exe" concept 73 is therefore defined in the "ExeContentType" concept 90.

Also included in Figure 4 is a "Body" concept 93, which has a number of properties 94, and a "Verb" concept 95, having a number of properties 96, which are related to the "Exe" concept by the relationships 97 and 98, respectively.

Verbs are a specialist form of Exe which are used to generate an output in a predetermined format. The Verbs are therefore generally formed from structured Java code which is designed specifically to perform required operations. In turn, the Bodies are algorithms which are used by the Verbs in order to generate the desired output. To support the type-safe implementation of Body code, a code generation step exists in which the business domain model is directly reflected in Java classes. This means the algorithms can be implemented directly in the concepts of the domain model, thus making the algorithms more readable. Accordingly, it can be seen that Verbs are another instance of "business data" (comprising meta-model entries and source code).

Instances of the "Body" concept 93 define different start points which may exist for a Verb which is an instance of the "Verb" concept. Thus, for example, if a number of different start points are available for a specific operation, then each body defined within the "Body" concept represents an algorithm which is able to perform the implementation based on a specific start point.

An example of such a system is the use of a verb to calculate the pay provided to workers by a company. Typically, the pay will be effected by whether the person being paid is an employee, or an outside contractor, as well as being effected by whether the work was performed inside or outside the EU (European Union).

Accordingly, in order to be able to handle this, four separate bodies would be provided. These bodies will be algorithms designed specifically for calculating the pay for each of the four different circumstances. Thus, a respective body will be provided for calculating the pay of an employee inside the EU, the pay of an employee outside the EU, the pay of a contractor inside the EU, and the pay of a contractor outside the EU.

In each case, the algorithm is designed to calculate the pay on the basis of data provided to the bodies, the data indicating the nature of the worker (i.e. whether the worker is an employee or a contractor), and where the worker was working.

In practice, this is achieved by initially transferring the data to the verb. The verb examines the data and determines which body will be capable of receiving data and calculating the correct pay. The data is then transferred to the body which calculates the pay and returns an indication of the calculated pay to the verb for subsequent output.

This represents a significant improvement over previous object orientated techniques because the verb makes the choice of which body should be used to calculate the desired output. Thus, using object orientated programming techniques it would be necessary for the programmer to determine the choice of how the pay should be calculated using for example "IF" statements. In this case, because the choice would typically have to be specified several times within the programming code, any change would have to be reflected throughout the program code. Thus, the use of Verbs in the present invention ensures that if a change is required, this can be implemented by simply changing the algorithm associated with the Body and/or changing the relationships between the Body and the corresponding Verb.

Accordingly, from this it will be realised that each Verb is associated with a collection of one or more Bodies, with each Body being used by the Verb to generate the desired output from a respective start point.

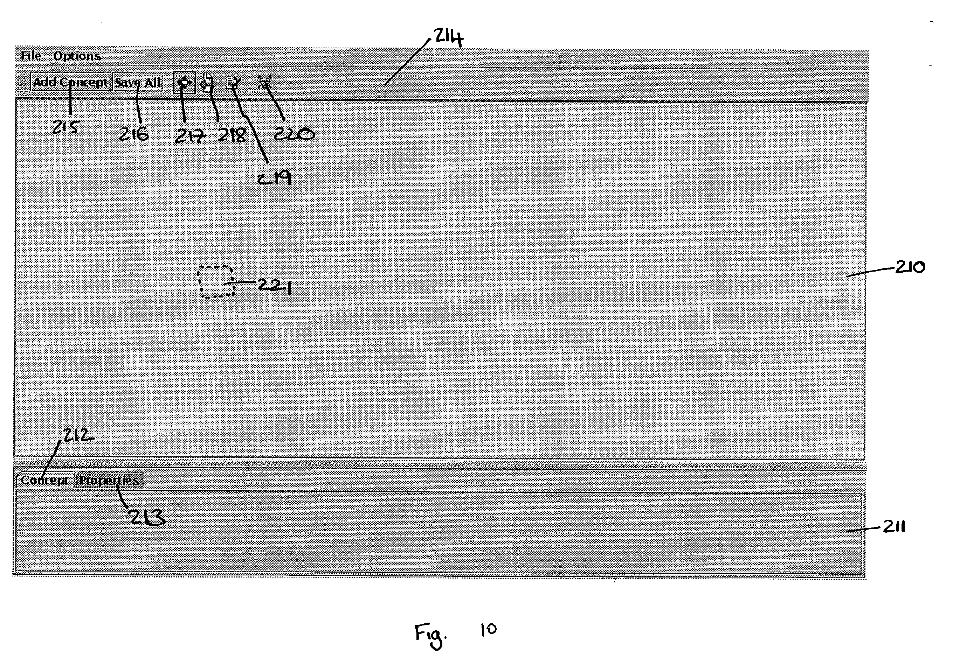

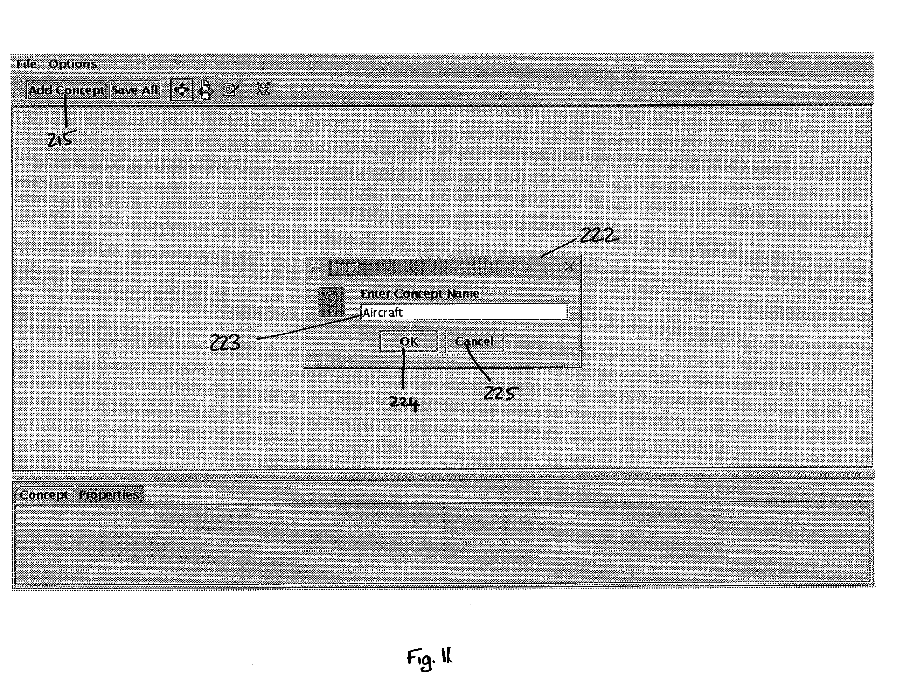

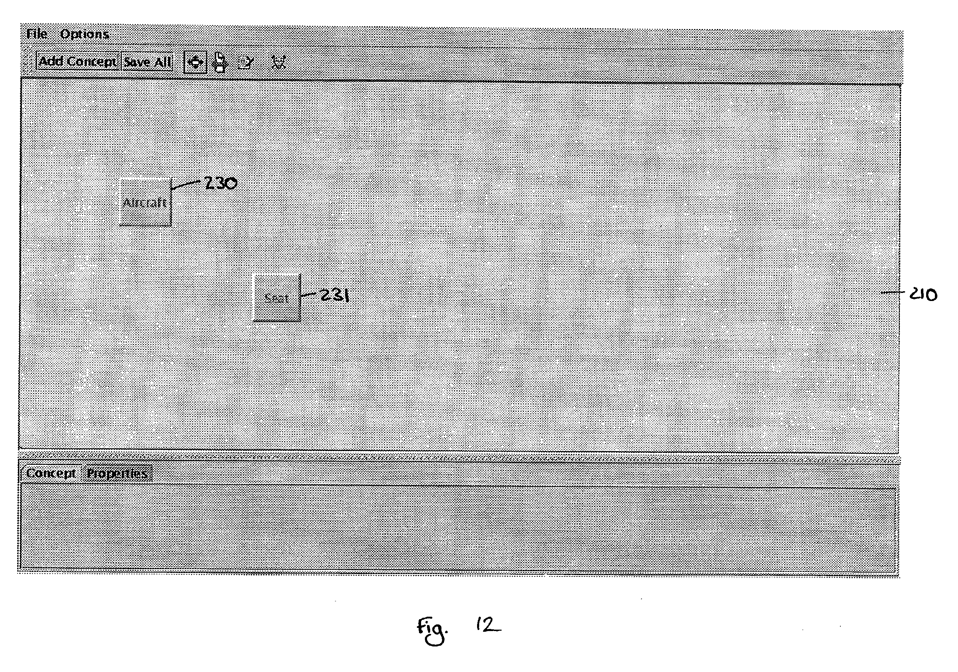

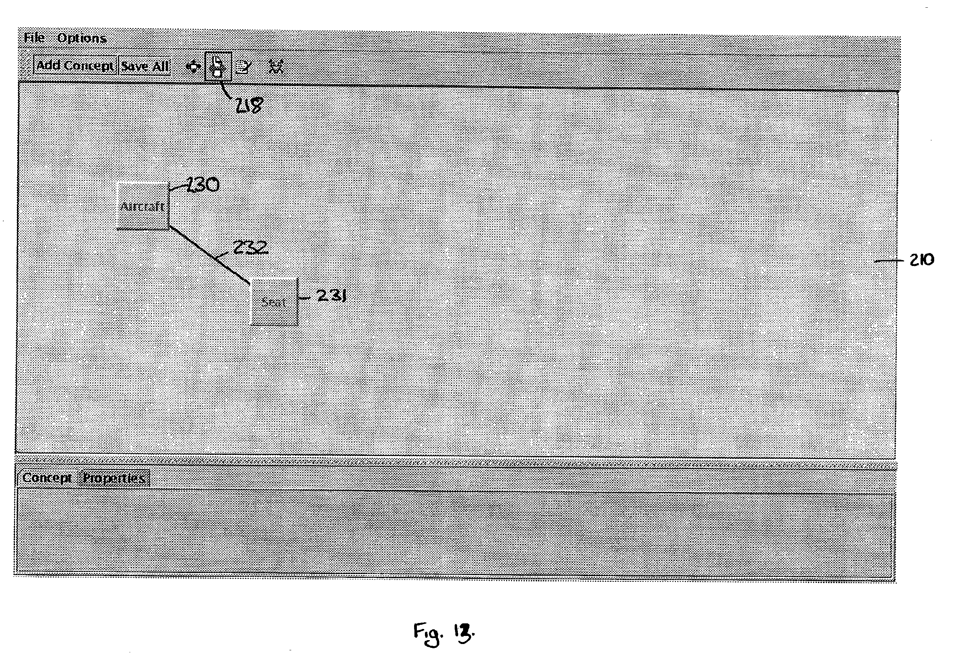

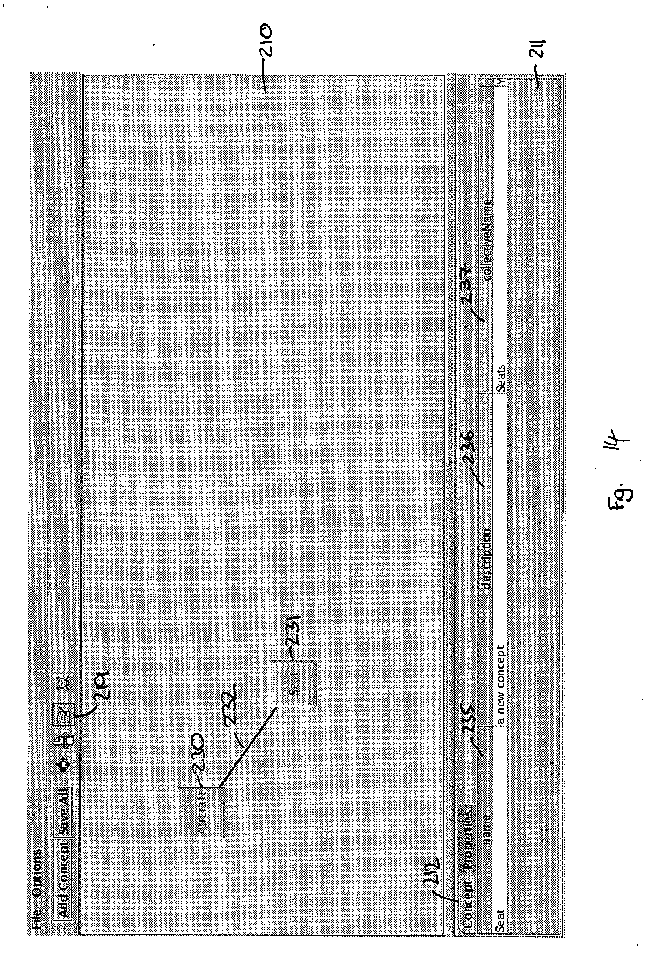

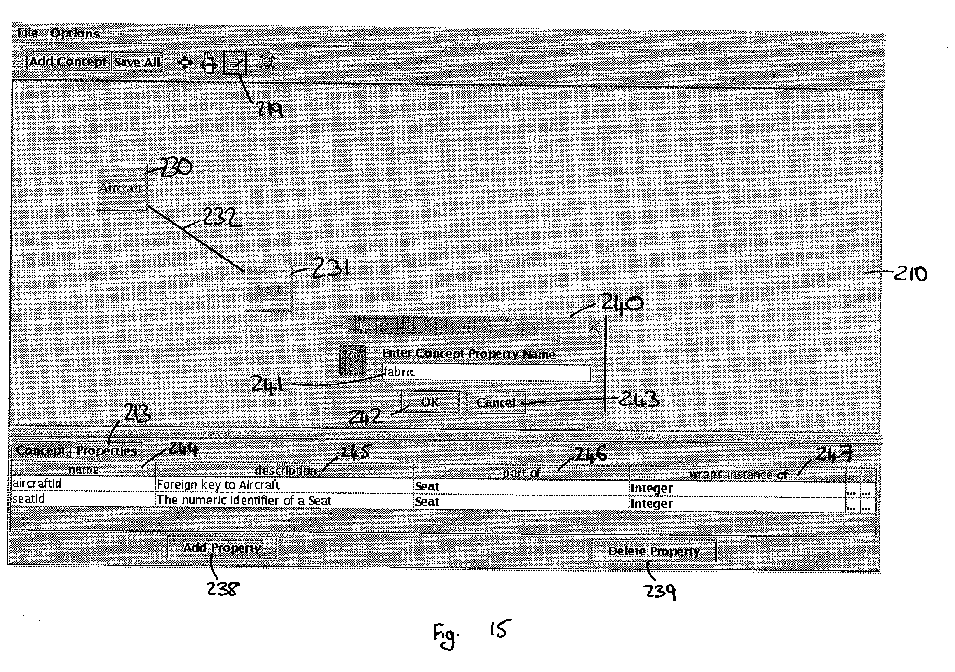

The relationship between the "Verb" concept and the "Body" concept is shown in more detail in Figure 5.

As shown, the "Body" concept 93 is related to the "Verb" concept 95 by a relationship 99.

Also related to the "Verb" concept 95 is a "VerbOutput" concept 100 having a number of properties 101. In this case, the "VerbOutput" concept 100 defines the nature of the output produced by the appropriate verb within the "Verb" concept 95.

As the bodies defined within the "Body" concept 93 must be capable of receiving inputs in different formats a "VerbInput" concept 103 is provided with a number of properties 104. The "VerbInput" concept 103 is used to determine the nature of input data and then select an appropriate instance of the "Body" concept 93 depending on the nature of the data, as indicated by the relationship 105.

A "VerbThrowable" concept 106 is also provided. Again, this includes a number of properties 107 and is used to define when the processing performed by a Verb has an exception. Again, the "VerbThrowable" concept 106 is related to the "Body" concept 93 by relationship 108.

Returning to Figure 4, in addition to the "Body" and "Verb" concepts 93,95 an "ExeConstraint" concept 109 is provided having properties 110. The "ExeConstraint" concept 109 defines constraints on the Exes defined as instances of the "Exe" concept 73, as shown by the relationship 111.

The "ExeConstraint" concept 109 is also related to an "EnvType" concept 112 by a relationship 113. The "EnvType" concept 112 is used to define a different operating environment in which the system may operate.

For example, if the Exe is a software application such as Word, or the like, it is possible to operate this Exe under the Windows™ operating environment on a personal computer, or the like. However, it is not possible to operate these under, for example, Unix type environments.

This places a constraint on the use of the respective Exe which is defined within the "ExeConstraint" concept 109, which specifies for each "Exe" concept instance the environment within which the respective Exe can be used. To allow this to be achieved, the usable environments are specified in the "EnvType" concept 112.

A mime is used to classify files and has associated with it a suffix which is typically placed on file names to define an association between the file and a particular program. Thus, for example, the suffix ".DOC" is typically associated with the Word™ application. In order to define the association between certain suffixes and particular Exes, the "MimeEditor" concept 117 (which has properties 118) is populated. The "MimeEditor" concept 117 is related to both the "Mime" concept 115 and the "Exe" concept 73, as shown by the relationships 119 and 120 respectively.

For example, in the case of an airline maintenance system business domain, it will be necessary to provide information regarding the maintenance log procedures for the aircraft in the fleet. This information is usually maintained by the engineering department in the from of a Word document, PDF file, or the like which is URL addressable. This URL address is then associated with an appropriate concept in the maintenance system business domain allowing the documents to be easily located at a later date.

The concepts and relationships required to implement this are shown in Figure 6.

As shown, a "URLConceptAttr" concept 125 having properties 126 is provided. The "URLConceptAttr" concept is used to define associations between instances of the "Concept" concept 75 and respective URL locations shown generally at 127, with each instance of the "URLConceptAttr" concept 125 representing a respective association.

As a result, "URLConceptAttr" concept 125 is related to the URL of the concept by a relationship 128 and to the "Concept" concept 75 by the relationship 129.

Similarly, a "URLAttr" concept 130 is provided, having properties 131, to allow each instance of each concept (instance of the "Concept" concept) to be assoicated with a respective URL shown at 132.

Accordingly, the "URLAttr" concept 130 is again related to the URL of each concept instance 132 by the relationship 133 and is also related to the "Concept" concept 75 by the relationship 134.

A "URLExeAttr" concept 135 is provided having properties 136. The "URLExeAttr" concept 135 is again used to allow each instance of the "Exe" concept to be associatd with a respective URL location, as shown at 137. Again, the "URLExeAttr" concept 135 is related to the location of each URL by the relationship 138 and to the "Exe" concept 73 by the relationship 139.

A "URLAttrType" concept 140 is provided to classify the different URLs which can be accessed, namely the URL of an Exe 137, the URL of a concept instance 132, and the URL of a concept 127. This is indicated by the relationships 142,143,144 as shown.

The "URLAttrType" concept 140 is also related to a "URLStringType" concept 145, which indicates the type of URL string which must be used to access each type of URL. In this case, the relationship is shown at 147.

Furthermore, a "Suffix" concept 148 is provided which is related to the "URLAttrType" concept 140 as shown by the relationship 150 to allow different mime suffixes to be applied when the URLs are being accessed.

Accordingly, non-relational data is handled by tying the data in to respective concepts within the meta-model. Once the relationship has been defined, for example, this allows a user of the system to easily to access a particular maintenance log due to this defined association.

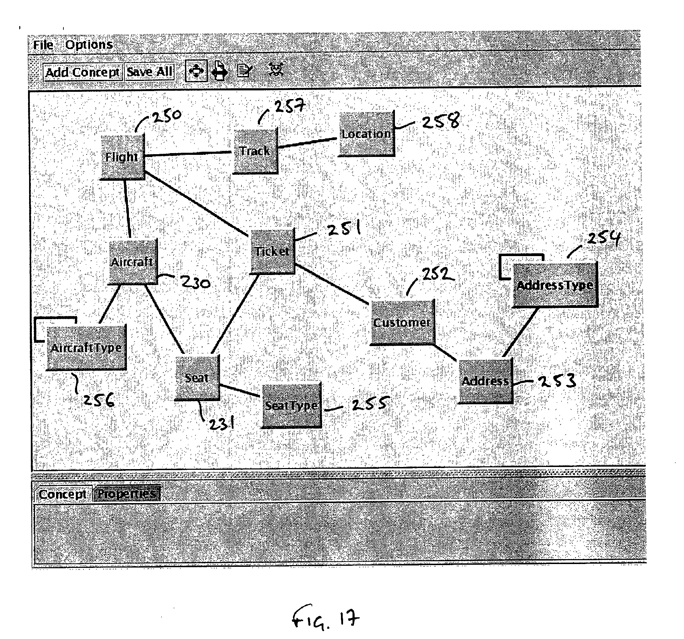

The infrastructure models will now be described in more detail with reference to Figure 7, which shows the infrastructure models and the relationships therebetween.

In addition to the relationships defined in Figure 1, the process model 6, the operations model 7 the configurations model 8 all depend on the install model 9, as shown by the relationships 160,161,162. In addition to this, the operations model 7 also depends on the process model 6 as shown by the relationship 163.

The process model 6 models the current execution state of the business domain model, each aspect of execution being represented by a respective concept within the process model.

This is achieved by defining running processes as concepts within the process model. Data is then captured from the remaining infrastructure and business domain models, and used to populate the process model so that the process model effectively maintains a snapshot of the execution of the business model in its current state, as well as maintaining a historical record of previous operations.

The process model also takes into account the environment in which the business model is being implemented, allowing the process model to determine the resources that are available.

In addition to this, the process model can be adapted to store information regarding previous actions which have been performed. This allows a history of the actions which have been performed by users to be viewed.

Thus, a user of the system can at any time access the process model and determine not only what processes are currently being performed and where, but also what has been performed in the past, and what the current available resources are.

The operations model 7 is adapted to model operational and statistical data on both a historical and live snapshot basis. This is achieved by populating the operations model with status and audit data generated by the business process model, allowing the information to be viewed as required.

The install model 9 defines the installation of the computer program product carrying the model execution application onto one or more operating systems and machines. Thus, the install model will define the supporting software and hardware systems, such as the operating and database systems. This will include information regarding the location of data on the system, how resources should be used by the computer program product, how information should be presented to a particular user on a screen.

In order to do this, the install model is populated so as to determine certain information regarding the operating systems and platforms, for example databases, data feeds, on which it is to operate.

This will typically include details of the hardware on which the software is to run, such as the presence of a network, the computers which will be used, the location of any external data sources, and the like.

Once this has been completed, the install model will comprise a repository of where data, including the business model concepts, and the business data are stored.

The install model is also used to define user settings, such as user names, passwords, security privileges and the like.

The configuration model 8 defines how the computer program product should be adapted to take account of low level unstructured configuration data addressed at each of user, user-group, environment type and business processes.

An example is for the configuration model to be used to control how often a fax machine will redial a number when a connection cannot be established at the first attempt, whereas in the case of a clock, the configuration model can be used for example to control the frequency with which the clock is updated.

In general, the hierarchical structure of the configuration model is such that user settings are given a higher priority than group settings, environment (machine) settings and Exes settings, in turn. Thus, for example, it may be that a certain group within the company, such as the Accounts Department, have their computers set up to present the accounts information in a certain way. However, an individual user setting could then be used to ensure that one particular member of the Accounts Department has the account information presented on their computer in a different way. In practice however there is generally very little overlap between the different classes.

The process of designing and implementing a business model will now be described.

Firstly, as outlined above, it is necessary for an analyst to perform an analysis of the business in order to divide the business into a number of independent business domains, each of which can be modeled separately.

Once this has been completed, the analyst can model a business domain by determining the core concepts of the business domain and their relationships. This is then defined in terms of the meta-model by generating and then populating appropriate data tables.

The procedures of analysing the business and determining the concepts in the business domain will typically be coalesced so that they can be performed in an iterative manner to allow the analyst to use information as it is determined to improve the business model, as will be appreciated by a person skilled in the art.

In practice, the present invention would typically be implemented as an enterprise application, within in a corporation and an example of such a configuration is shown in Figure 8.

In this case, the enterprise application consists of corporate network 300, to which is coupled a file server 301, a data server 302, and a number of end stations 303.

In use, the software for operating the present invention is provided on a CD-ROM that must initially be installed on the system. The structure of the computer program product 400 is shown graphically in Figure 9. As indicated, the product is made up of a number of high level code packages, each package being represented by one layer in the structure. Each package is potentially dependent on those beneath it. The packages can be divided up into distinct groups: those that are provided with the CD-ROM 401; those that are provided by the system software vendor 402; those that are provided by a modeller or programmer developed using a code generator associated with the product 403; and those that are provided by the modeller or programmer 404. The structure 400 represents a single process, within which there may be a number domain dependent modules 405 sitting over the underlying packages. One of these modules is the meta-model, which is already provided on the CD-ROM.

At this stage, the infrastructure model (the installation model and configuration model components) presents a user interface that allows a systems administrator to install the various software components provided on the CD-ROM.

The systems administrator is presented with an installation wizard that takes him through this process, allowing him to populate the infrastructure model with implementation data defining the installation of the product onto one or more operating systems and machines. The installation model allows him to define (by populating the model)the supporting software and hardware systems, such as the operating and database systems. This includes the location of data on the system, how resources should be used by the product, how information should be presented to a particular user on a display screen, security access for each user, and the like. Likewise, the configuration model can be populated with data defining how the product should take account of low level unstructured configuration data addressed at each of user, user group, and environment and business processes.

As shown, in this example the meta-model and infrastructure models are stored in the data server 302, with the source and object code of the meta-model and infrastructure model being stored in the file server 301.

Having achieved the initial installation, an analyst or systems developer can then use one of the end stations 303 to access the modeling software of the present invention and generate business domain models, as described in more detail above.

As this is performed, the business domain models are written into the data server 302 as a number of related data tables.

Once this has been completed, a programmer will be used to generate applications specific source code, which is stored in the file server 301. The applications specific source code is any source code which is required for the specific business domain model being implemented. This is typically used, for example, to ensure that data is presented to the user in the form of a readily understandable representation.

The next stage is for the systems administrator or systems developer to generate further implementation data which is used to populate the infrastructure model (the installation model and configuration model components) that allows the process of the business domain model to be executed. These may include algorithms and the like which are not defined within the infrastructure model but which are required to implement the business.

Next it is necessary to populate the business model with business data representative of the business. This business data may be obtained from a number of sources depending on the nature of the data and the circumstances in which it is provided.

A large amount of the data typically has to be entered by hand using one of the end stations 303. However, data regarding the facilities of the business may be available from an external source, in which case, this can be obtained from a data feed (not shown). It is also possible to obtain data from the Internet, or the like.

Once the initial business data has been provided, it is then possible to operate the business model. During operation, any data that is required can either be entered by the respective user of the system, such as request data, or can alternatively be obtained from the data server 302 in the case of business data.

In order to make this process easier, the present invention is typically implemented as a software program which provides the user with a GUI (graphical user interface) which presents the information to the user in a conceptual manner.

In its basic form, the present invention can therefore be implemented on the processing system, such as a personal computer, laptop, palmtop, or the like. However, it is more likely to be installed over a network.

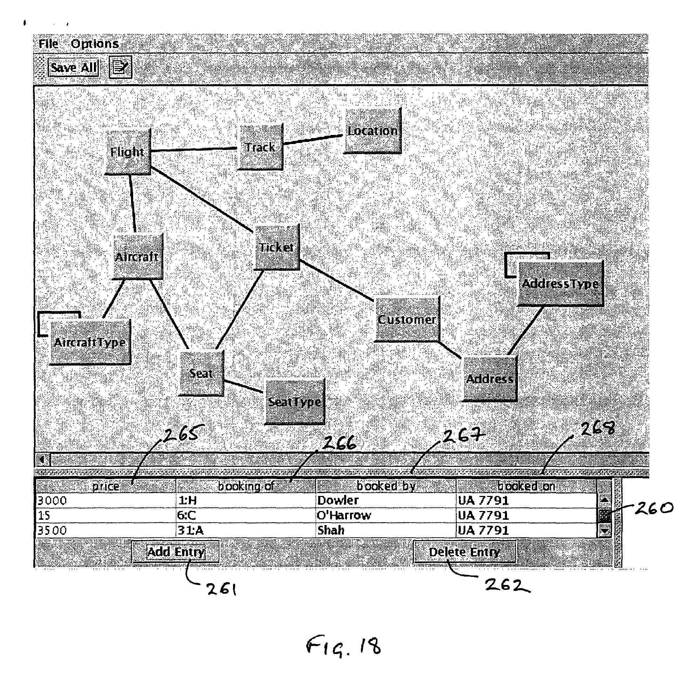

As shown, the GUI in Figure 10 comprises a modeling screen 210 on which the model under construction is shown. Positioned below the modeling screen 210 is a concept/properties screen 211 which shows either the details of a concept, or the details of each property of the concept depending on whether the concept tab 212 or the properties tab 213 has been selected. Positioned above the modeling screen 210 is a tool bar 214 which includes an add concept icon 215, a save all icon 216, a move concept icon 217, a create relationships icon 218, a details icon 219, and a delete icon 220, as shown.

In use, a model is generated by activating the add concept icon 215 to allow a concept to be defined. As will be explained in more detail below, once details of the concept have been entered, this causes a respective concept box, shown by the dotted line 221, to be presented to the user on the modeling screen. Once a number of concepts have been defined, it is then possible to rearrange the positioning of the concepts by selecting the move concept icon and then clicking and dragging on the respective concept box 221. Relationships can then be created between the concept box by simply clicking on the create relationships icon 218 and then clicking and dragging from one concept box 221 to another. Details of the concepts can then be entered by clicking on the details icon 219. The defined model can then be saved by selecting the save all icon 216. At this point, a code generator (not shown) is invoked so as to prepare the model for execution and/or further development. Portions of the model can be deleted as and when necessary using the deletion icon 220.

In use, as a concept is defined, it is given a respective name which is entered using the input device, and which is then entered into the name property of the "Concept" concept table by the processor 202.

Once this has been completed, other properties of the concept are also entered in a similar manner.

As the relationships are entered using the GUI, the processor 202 similarly operates to enter respective data within the relationships concept. Simultaneously, a primary key and a foreign key are defined. Accordingly, in this manner a model of the business showing the core concepts and the relationships there between is defined in accordance with the meta-model.

Once this has been completed, and all the properties of each of the concepts have been defined, it is then possible to enter the business data in the respective tables which have been generated by the processor 202 which represent instances of the respective concepts.

This process will now be described in more detail with respect to the example of an airline check-in system. In this case, the designing of this business domain model would be as shown in Figures 11 to 19 as set out below.

Thus, as mentioned above, the first stage is to define an aircraft concept. This is achieved by clicking on the add concept icon 215 which causes an input box 222 to be displayed as shown. Details of the concept name are then entered at 223 and the OK button 224 selected to proceed to the next stage. A cancel button 225 is also provided to cancel the operation.

Once this has been completed, an aircraft concept will be displayed on the modeling screen 210. An example of the modeling screen 210 including both an aircraft concept 230 and a seat concept 231 is then shown in Figure 12.

Once the aircraft and seat concepts 230, 231 have been defined, it is then possible to define a relationship 232 therebetween. This is achieved by clicking on the create relationships icon 218 to enter a "relationships mode". Once this has been achieved, the relationship is then defined by first selecting the respective one of the concepts and then clicking and dragging the cursor to the other concept to create the relationship. The direction in which this is done will define the relationship.

Accordingly, in this example, the seat concept 231 is the child concept of the aircraft concept 230. Accordingly, to define a relationship 232, which is shown in Figure 13, the user would select the relationships icon 218 to enter the relationships mode and then click on the seat concept 231. The cursor would then be dragged to the aircraft concept 230 causing the relationship 232 to be defined.

Defining the relationship 232 will cause the processor 202 to define a relationship within the corresponding data tables of the meta-model. This is achieved by defining a ConceptKey entry on the aircraft concept 230 and defining a RefConceptKey entry on the seat concept 231, as described in more detail above.

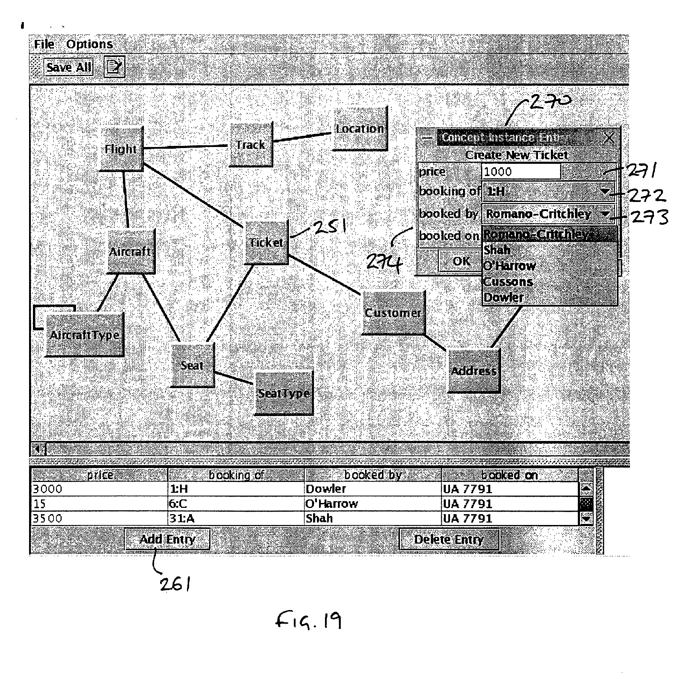

In order to do this, it is of course necessary to enter the properties of the concepts. In order to achieve this, the details icon 219 is selected and the concept tab 212 highlighted. As shown in Figure 14, this will cause details of the currently selected concept (in this case the seat concept) to be displayed in the concept/properties screen 211. This typically includes a name column 235, which shows the name of the concept, a description column 236 which provides a brief general description of the concept, and a collective name column 237 which provides a collective name for the instances of the respective concept.

First, once the seat concept 231 has been defined, the user will then select the details icon 219 and enter the respective description and collective name in the respective description and collective named columns 236, 237.

This process can be repeated for each concept and in order to find the details of the relevant concepts, the respective concept 230, 231 must be highlighted on the modeling screen 210 so that the details are displayed in the concept/properties screen 211.

Once the concepts themselves have been defined, it is then possible to define the properties of the concept. In order to do this, the properties tab 213 and the details icon 219 must be selected to display the properties of the respective concepts in the concept/properties screen 211. Once this has been completed, properties can be added or removed using the add property or delete property icons 238, 239, as required.

Selecting the add properties icon 238 causes a properties input box 240 to be displayed on the modeling screen 210, as shown in Figure 15. The properties input box 240 includes an entry field 241 into which the name of the respective property can be entered. Once this has been completed, the okay button 242 is depressed. Again, a cancel button 243 is also provided.

Once the okay button 242 has been depressed, the respective property name will be entered in a name column 244, as shown with the previously defined aircraft ID and seat ID properties.

Once the property has been entered, the processor 202 operates to attempt to assign a description to the property. This, in the case of the aircraft ID property this is also included as a primary key within the aircraft concept. Accordingly, the processor 202 determines that the aircraft ID is in fact a foreign key to the aircraft and then enters this is the relevant description column 245. Similarly, the processor 202 works out that the aircraft ID is now part of the seat concept which is entered in the part of column 246.

In either of these cases, if the description or part of the properties of the concept cannot be determined by the processor 202 then these details are entered by the user.

Finally, it is necessary for the user to specify the type of value the property will take, such as an integer, a character string, a floating point number or the like and this is entered into the wrapped instance of column 247 as shown.

Thus, in the example shown in Figure 15, once the fabric property name has been defined, a new entry will be created in the name column 244 as shown at 248 in Figure 16. In this case, details have also been entered in the relevant description, part of and wrapped instance of columns 245, 246, 247 as shown.

In this manner, it is then possible to add in all the concepts required to implement the respective business domains.

Accordingly, in the present example of the airline check-in system, in addition to the aircraft concept 230 and the seat concept 231, it is also necessary to define a flight concept 250 which provides details of respective flights, a ticket concept 251 which provides details of the tickets provided, a customer concept 252 which provides details of the respective customer, an address concept 253 which provides the customers address, and an address type 254 which defines the nature of the customers address.

A seat type and aircraft type concepts 255, 256 are also provided to specify the type of seat, such as first class, economy, window, aisle seat and the type of aircraft, such as a Boeing 747 or the like.

Finally, a track concept 257 and a location concept 258 are used to identify a link between two locations and an airport, respectively.

Relationships are then defined between the concepts as shown.

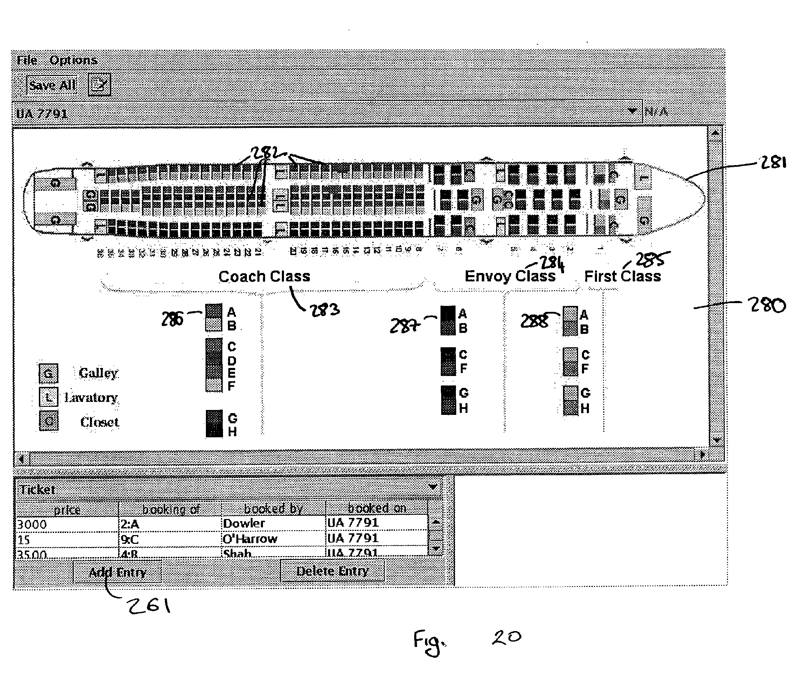

Once all the concepts have been defined as shown in Figure 17 it is then possible to populate the model with data (which may take the form of Java code).

In general, this process would include two stages. Firstly, it would be necessary to populate the model with data representative of the business resources. Thus, for example, the data table corresponding to the aircraft concept 230 would be propagated with data representing details of the relevant aircraft owned by the airline company. Similarly, this will be performed for each of the concepts within the current business domain model.

In order to achieve this, a data editor is used and an example of this is shown in Figure 18. As shown, the data editor includes the modeling screen 210 to show the business domain model. Below the modeling screen, however, is positioned a details screen 260 which shows details of data entered into different concepts. In this case, entries are added by clicking on the add entry button 261 and removed by clicking on the delete entry button 262.

Once the background data showing the resources of the company has been entered, it is then possible to enter specific data relating to actual bookings. Accordingly, as shown in the present example of the airline booking system, a price column 265, a booking column 266, a booked by column 267 and booked on column 268 are provided. These indicate the price of the seat, the seat which is booked, the name of the person making the booking and the item which this is booked, respectively.

The process of adding in a particular entry is shown in more detail in Figure 19. As shown, when the add entry button 261 is selected, an input box 270 for creating a new concept instant entry will be displayed. In this example, the concept instance to be created is an instance of the ticket concept 251 (i.e. the procedure creates a new ticket), and accordingly, the ticket concept would need to be selected before the add entry button 261 is pressed.

Once this has happened, the create new ticket input box 270 will be displayed. Within this box there will be included separate fields 271, 272, 273, 274 which are provided to allow a person to input a price, a seat number, a detail of who booked the ticket and a detail of the flight as shown. These fields are generated in accordance with the properties of the ticket concept which will have been defined as described in more detail above.

Accordingly, this system provides a model which can be executed by the business to implement the respective business domain.

However, the way in which the information is presented to the user as a default is not necessarily very intuitive. Accordingly, it is possible to define an interface which will translate the manner in which information is provided to the user. An example of this is shown in Figure 20. In this case, the data editor for adding a ticket has been adapted to replace the model screen 210 with the screen 280 which includes an aircraft representation shown at 281.

The aircraft representation sets out the location of seats in the aircraft as shown for example at 282 together with details of the different classes of seat available at 283, 284 and 285, and an indication of the actual seats available in each class shown at 286, 287, 288. This can be achieved relatively easily by simply providing a translation of the data provided in the concepts of the respective airline booking system business domain model. As a result, the user is presented with a far more intuitive way of entering the data.

Thus for example, the aircraft representation 281 will be generated by reference to the seat concept. Accordingly, each seat representation 282 will be tied to a respective instance in the seat concept table. Selecting the relevant seat representation 282 will therefore cause the data in the relevant seat concept table to be selected.

Thus, if the operator of the system selects a seat representation 282 and then clicks on the add entry button 261, this will automatically generate a create new ticket concept instance box 270 which includes details of the seat 282. The seat would typically be associated with a respective price and accordingly, the information can automatically be propagated into the create new ticket box 270 in the respective fields 271, 272, 273, 274 such that only unknown information, such as the name of the person booking the ticket needs to be entered.

## Claims

1. A computer program product comprising computer executable instructions defining a model execution application, the model execution application implementing a meta-model which is adapted to be populated with user inputs to generate one or more models, the meta-model being structured as a number of concepts, each concept having a number of properties, and one or more relationships between the properties of one or more of the concepts, wherein the relationships are defined as a concept within the meta-model.

2. A computer program product according to claim 1, in which the meta-model includes an active concept which can be populated with software components.

3. A computer program product according to claim 1 or 2, in which the model execution application comprises a computer program code portion that provides access to the meta-model and which is adapted to accept user inputs to allow a model to be generated.

4. A computer program product according to any preceding claim, in which the model execution application comprises a program code portion that provides access to models generated using the meta-model so that the models can be executed by one or more users.

5. A computer program product according to any preceding claim, in which the model execution application comprises an infrastructure model defined in terms of the meta-model that facilitates the execution of the meta-model and any models generated using the meta-model.

6. A computer program product according to claim 5, in which the infrastructure model is adapted to accept user defined implementation data inputs to populate the infrastructure model.

7. A computer program product according to claim 5 or 6, in which the infrastructure model is adapted to present a user interface that allows the meta-model to be installed and executed by a user.

8. A computer program product according to any of claims 5 to 7, in which the infrastructure model comprises an install model defining the installation of the computer program product.

9. A computer program product according to any preceding claim, in which at least one of the properties of each concept represents a primary key, the primary key being unique for each instance of the concept.

10. A computer program product according to any preceding claim, in which when a second concept is related to a first concept, one of the properties of the second concept represents a foreign key, the foreign key corresponding to the primary key of the first concept and representing the relationship between the two concepts.

11. A computer program product according to any preceding claim, in which the meta-model is adapted to be populated by data, each concept defining a respective data table, and each property defining a respective column within the table.

12. A computer program product according to claim 11, in which the data tables are populated by entering instance data representing an instance of the respective concept, the instance data being entered within a respective row of the data table.

13. A computer program product according to claim 12,
wherein the instance data specifies the properties of the instance of the concept.

14. A computer program product according to any preceding claim, in which the meta-model includes a "Concept" concept defining the concepts of the model to be defined, the properties of the "Concept" concept defining the properties of the concepts of the model to be defined.

15. A computer program product according to claim 14, in which the meta-model includes a "ConceptProperty" concept which is related to the "Concept" concept, each instance of the "ConceptProperty" concept defining the properties of a respective concept defined in the "Concept" concept.

16. A computer program product according to claim 14 or 15, in which the meta-model includes a "ConceptKey" concept related to the "Concept" concept, each instance of the "ConceptKey" concept identifying the primary key of a respective concept defined in the "Concept" concept.

17. A computer program product according to any of claims 14 to 16, in which the meta-model includes a "ConceptRel" concept related to the "ConceptKey" concept, each instance of the "ConceptRel" concept identifying the relationships between the concepts defined in the "Concept" concept.

18. A computer implemented method of generating a software application comprising the steps of:
populating a meta-model with data to define a model; and,
associating said model with a predefined infrastructure model by populating the infrastructure model with implementation data associated with said model so as to define an executable specific software application.

19. A computer program product comprising computer executable code for building software applications, the computer program including a model execution application implementing a meta-model that is adapted to be populated with user inputs to generate one or more models, the model execution application also including a predefined infrastructure model, the program being adapted to:
populate the meta-model with data input by a user to generate a model; and,
associate said model with the predefined infrastructure model by populating the infrastructure model with implementation data associated with said model input by a user so as to define an executable specific software application.

20. A computer implemented method of executing a business domain model, the business domain model modelling the semantics of the business domain and being defined in terms of a meta-model, the method comprising the step of associating the business domain model with an infrastructure model, the infrastructure model being defined in terms of the meta-model, to define an executable specific software application, in which the infrastructure model is populated with implementation data associated with the business domain model.

21. A method or computer program product according to any of claims 18 to 20, in which the infrastructure model is defined in terms of the same meta-model.

22. A method or computer program product according to any of claims 18 to 21, in which the meta-model is structured as a number of concepts, each concept having a number of properties, and one or more relationships between the properties of one or more of the concepts, wherein the relationships are defined as a concept within the meta-model.

23. A method according to claims 18 or 20, in which the meta-model is used to define a business domain model that represents a business or a part thereof.

24. A method of modelling a business domain comprising the steps of:
dividing the business domain into a number of core concepts, each core concept having a number of properties and representing a self contained function of the business domain;
determining the relationships between the core concepts; and,
populating a meta-model with data representing the core concepts and the relationships there between to thereby model the business domain.

25. A method according to claim 24, in which the meta-model is structured as a number of concepts, each concept having a number of properties, and one or more relationships between the properties of one or more of the concepts, wherein the relationships are defined as a concept within the meta-model.

26. A method according to claim 24 or 25, in which the business domain model is defined by:
dividing the business domain into a number of core concepts, each core concept having a number of properties and representing a self contained function of the business domain;
determining the relationships between the core concepts; and,
populating the meta-model with concept data representing the core concepts and the relationships there between.

27. A computer program product comprising computer generated code mirroring a business domain, the computer program product including a business domain model which models the semantics of the business domain, and an infrastructure model which models the infrastructure of the business domain, wherein the business domain and infrastructure models are defined in terms of a meta-model, the meta-model comprising a number of concepts, each concept having a number of properties, and one or more relationships between the properties of one or more of the concepts, wherein the relationships are defined as a concept within the meta-model.

28. A computer program product comprising computer executable code for defining a model, the computer program implementing a meta-model which, when populated with user input data, defines the model, the meta-model comprising:
a number of concepts, each concept having a number of properties; and,
one or more relationships between the properties of one or more of the concepts,
wherein the relationships are defined as a concept within the meta-model such that the meta-model can be described in terms of the concepts and relationships defined therein.

29. A computer program product according to claim 28, the computer program product being adapted to define a business model, the business model comprising:
an infrastructure model which models the business infrastructure; and,
a business domain model which models the semantics of the business.
wherein the business domain and infrastructure models are defined in terms of a meta-model.
